# EUROPÄISCHE PATENTSCHRIFT

(11) **EP 4 226 187 B1**
(45) Veröffentlichungstag und Bekanntmachung des Hinweises auf die Patenterteilung: **27.08.2025**
(21) Anmeldenummer: 21783200.5
(22) Anmeldetag: 23.09.2021
(51) Int. Cl.: G01S 15/46, G01S 7/539, G01S 15/931, G01S 15/89, B62D 15/02, B60W 30/06

(54) **VERFAHREN ZUM VERMESSEN EINES SEITLICHEN UMFELDS EINES FAHRZEUGS, MESSVORRICHTUNG UND FAHRZEUG**
METHOD FOR MEASURING A LATERAL SURROUNDINGS OF A VEHICLE, MEASURING APPARATUS, AND VEHICLE
PROCÉDÉ DE MESURE D'UN ENVIRONNEMENT LATÉRAL D'UN VÉHICULE, APPAREIL DE MESURE ET VÉHICULE

(30) Priorität: 07.10.2020 DE 102020126165
(43) Veröffentlichungstag der Anmeldung: 16.08.2023
(73) Patentinhaber: Valeo Schalter und Sensoren GmbH, 74321 Bietigheim-Bissingen (DE)
(72) Erfinder: JECKER, Nicolas, 74321 Bietigheim-Bissingen (DE)
(74) Vertreter: Pothmann, Karsten
(86) Internationale Anmeldenummer: PCT/EP2021/076201
(87) Internationale Veröffentlichungsnummer: WO 2022/073771

(56) Entgegenhaltungen:
- DE-A1- 102017 107 386
- DE-A1- 102017 128 983
- DE-A1- 102018 102 786
- WAN-JOO PARK ET AL: "Parking space detection using ultrasonic sensor in parking assistance system", INTELLIGENT VEHICLES SYMPOSIUM, 2008 IEEE, IEEE, PISCATAWAY, NJ, USA, 4 June 2008 (2008-06-04), pages 1039 - 1044, XP031318941, ISBN: 978-1-4244-2568-6

## Beschreibung

Die vorliegende Erfindung betrifft das Gebiet der Parkassistenzsysteme für Kraftfahrzeuge und im Speziellen ein Verfahren und eine Messvorrichtung zum Vermessen eines seitlichen Umfelds eines Fahrzeugs mit einem seitlichen Ultraschall-Sendeempfänger sowie ein dementsprechendes Fahrzeug.

Moderne Fahrzeuge verfügen über Parkassistenzsysteme, die dazu eingerichtet sind, ein seitliches Umfeld eines Fahrzeugs zu vermessen, eine Parklücke zu ermitteln und das Fahrzeug halb- oder vollautomatisch in die Parklücke einzuparken. Ein bekanntes Verfahren zum Vermessen des seitlichen Umfelds verwendet Ultraschall-Sendeempfänger, um die Entfernung zu Objekten in dem seitlichen Umfeld anhand der Laufzeiten zwischen Aussenden eines Sendesignals und Empfangen eines zugehörigen Echosignals zu bestimmen.

Weiter lehrt die DE 10 2005 044 050 A1 ein Verfahren zur Parklückenbestimmung für Kraftfahrzeuge, bei dem eine Bewertung der Höhe des Objekts in einem seitlichen Umfeld eines Kraftfahrzeugs anhand dessen erfolgt, ob in Reaktion auf das Aussenden eines Sendesignals ein einzelnes Echosignal empfangen wird oder zwei Echosignale empfangen werden, die ein Doppelecho bilden.

Diesen Gedanken fortführend lehrt die DE 10 2007 035 219 A1 das Erzeugen eines Objektklassifikationssignals abhängig von einer Anzahl lokaler Maxima eines Empfangssignals. Die DE 10 351 314 A1 lehrt ein Verfahren zum Bestimmen der Lage eines Reflexionspunkts auf einem Objekt in einem seitlichen Umfeld eines Kraftfahrzeugs. An zwei unterschiedlichen Positionen wird ein jeweiliges Sendesignal ausgesendet, ein zugehöriges Echosignal empfangen und eine jeweilige Entfernung bestimmt. Anhand der beiden Entfernungsmessungen und des Abstands zwischen den beiden Positionen wird sodann mithilfe des Verfahrens der Triangulation bzw. Trilateration eine präzisierte Lage des Objekts berechnet.

Die DE 10 2018 102786 A1 lehrt ein Verfahren zum Erfassen eines Objekts in einem Umgebungsbereich eines Kraftfahrzeugs mit Abschätzung der Höhe des Objekts anhand von Echoanteilen eines Empfangssignals, wobei das Empfangssignal einen zeitlichen Verlauf des in dem Umgebungsbereich reflektierten Ultraschallsignals beschreibt, wobei das Empfangssignal mit einer Schwellwertkurve verglichen wird.

Die DE 10 2017 128983 A1 lehrt ein Verfahren zur Abschätzung einer Höhe eines Objekts in einem Umgebungsbereich eines Kraftfahrzeugs mittels eines Ultraschallsensors mit statistischer Auswertung eines Empfangssignals.

Vor diesem Hintergrund besteht eine Aufgabe der vorliegenden Erfindung darin, das Vermessen eines seitlichen Umfelds eines Fahrzeugs zu verbessern.

Demgemäß wird unter einem ersten Aspekt ein Verfahren zum Vermessen eines seitlichen Umfelds eines mit mindestens einem seitlichen Ultraschall-Sendeempfänger versehenen Fahrzeugs vorgeschlagen. Das Verfahren umfasst die Schritte: a) Ansteuern des mindestens einen Ultraschall-Sendeempfängers an mindestens zwei Sende- und Empfangspositionen entlang einer lateralen Richtung, die eine Fahrtrichtung des Fahrzeugs ist, zum Aussenden eines jeweiligen Sendesignals in einer transversalen Richtung quer zu der Fahrtrichtung und Empfangen eines jeweiligen, aus dem seitlichen Umfeld reflektierten Empfangssignalverlaufs; b) Identifizieren einer Anzahl Echosignale in dem jeweiligen Empfangssignalverlauf; c) Trilaterieren einer Lage eines ersten Reflexionspunkts in dem seitlichen Umfeld, von dem die zeitlich ersten Echosignale in dem jeweiligen Empfangssignalverlauf reflektiert wurden; d) Auswählen, aus der Anzahl Echosignale in einem der Empfangssignalverläufe, eines Echosignals für eine Doppelechobestimmung abhängig mindestens von der in Schritt c) trilaterierten Lage des ersten Reflexionspunkts der zeitlich ersten Echosignale; e) Bestimmen, ob das ausgewählte Echosignal mit einem etwaigen weiteren, zeitlich darauffolgenden Echosignal ein Doppelecho ausbildet; und f) Bestimmen einer Höhe eines Objekts in dem seitlichen Umfeld an einem Reflexionspunkt, an dem das ausgewählte Echosignal reflektiert wurde, als hoch, falls in Schritt e) ein Doppelecho festgestellt wird, und als niedrig, falls kein Doppelecho festgestellt wird.

Insbesondere erfolgt somit die Doppelechobestimmung nicht stets mit dem ersten und zweiten Echosignal. Vielmehr wird abhängig mindestens von einer trilaterierten Lage eines ersten Reflexionspunkts, von dem die zeitlich ersten Echosignale in dem jeweiligen Empfangssignalverlauf reflektiert wurden, entschieden, anhand welcher von mehreren Echosignalen in dem jeweiligen Empfangssignalverlauf die Doppelechobestimmung erfolgt. Somit kann vorteilhafterweise ein zurückgesetztes Hindernis in dem seitlichen Umfeld sichtbar bzw. vermessbar gemacht werden, das sich zwischen weiteren Hindernissen in dem seitlichen Umfeld befindet und von diesen verschattet wird.

Unter Vermessen eines seitlichen Umfelds des Fahrzeugs ist insbesondere das Bestimmen von Höhen und Lagen von Objekten bzw. von Reflexionspunkten auf den Objekten in dem seitlichen Umfeld des Fahrzeugs zu verstehen.

Der seitliche Ultraschall-Empfänger ist insbesondere eine Vorrichtung, die dazu eingerichtet ist, Ultraschall-Signale bzw. Ultraschall-Signalverläufe in das seitliche Umfeld des Fahrzeugs auszusenden und von dort zu empfangen.

Unter einer "lateralen Richtung" ist vorliegend eine Richtung entlang einer Fahrtrichtung des Fahrzeugs bzw. eine Richtung entlang einer Front-Heck-Achse des Fahrzeugs zu verstehen. Unter einer "transversalen Richtung" ist vorliegend insbesondere eine Richtung zu verstehen, die quer zu der lateralen Richtung verläuft. Insbesondere ist die transversale Richtung senkrecht zu der lateralen Richtung.

Das von dem Ultraschall-Sendeempfänger ausgesendete Sendesignal kann insbesondere eine Signalkeule sein. Somit kann unter "Aussenden eines Sendesignals in einer transversalen Richtung" insbesondere zu verstehen sein, dass ein Maximum einer Signalintensität des ausgesendeten Ultraschallsignals in der transversalen Richtung ausgesendet wird. Die Signalintensität kann lateral abfallen. Das heißt, das ausgesendete Sendesignal kann in einen Winkelbereich von beispielsweise 30, 60, 90, 120 oder bis zu 180° oder jeden anderen Wert zwischen 0 und bis zu 180° ausgesendet werden, wobei das Maximum der Signalintensität in der transversalen Richtung ausgesendet wird.

Unter einem "Signal" ist vorliegend insbesondere ein Signalimpuls zu verstehen, dessen zeitliche Ausdehnung durch die zeitliche Lage eines Maximums einer Signalintensität und eine Breite des Signalimpulses um das Maximum herum definiert ist. Dagegen ist unter einem "Signalverlauf" insbesondere ein über einen längeren Zeitraum ausgesendeter bzw. empfangener Verlauf von Signalintensitäten zu verstehen. Ein Signalverlauf kann ein oder mehrere Signale bzw. Signalimpulse umfassen.

Unter einem "Echosignal" ist insbesondere eine Reflexion eines zuvor ausgesendeten Sendesignals aus dem seitlichen Umfeld des Fahrzeugs zu verstehen.

Insbesondere wird an einer jeweiligen Sendeposition zu einer Sendezeit ein Sendesignal bzw. Sendesignalimpuls ausgesendet. An einer jeweiligen Empfangsposition wird über einen bestimmten Empfangszeitraum hinweg ein Empfangssignalverlauf empfangen. In diesem werden sodann eine oder mehrere Echosignale identifiziert.

Das vorgeschlagene Verfahren kann beispielsweise unter Verwendung zweier Ultraschall-Sendeempfänger bei stehendem Fahrzeug ausgeführt werden. In diesem Falle können eine jeweilige Sendeposition und eine jeweilige Empfangsposition identisch sein, und der Begriff "Sende- und Empfangsposition" bezeichnet die Sendeposition und die mit ihr identische Empfangsposition. Die "Fahrtrichtung" kann in diesem Falle die Front-Heck-Richtung des Fahrzeugs bezeichnen.

Das Verfahren kann auch besonders vorteilhaft unter Verwendung eines einzelnen Ultraschall-Sendeempfängers bei fahrendem Fahrzeug ausgeführt werden. In diesem Falle bezeichnet der Begriff "Sende- und Empfangspositionen" mehrere Positionen in einem Abschnitt entlang der lateralen Richtung bzw. Fahrtrichtung des Fahrzeugs von dem Aussenden des Sendesignals bis zum Abschließen des Empfangens des Echosignalverlaufs. Jedoch kann auch in diesem Falle für jedes Sendesignal eine eindeutige Sendeposition identifiziert werden und für jedes identifizierte Echosignal kann eine Empfangsposition des jeweiligen Echosignals bestimmt werden. Dies kann insbesondere anhand einer Empfangszeit des Echosignals in Verbindung mit von einer Odometrieeinheit gelieferten Geschwindigkeitsdaten erfolgen.

Das "Identifizieren" der Anzahl Echosignale kann parallel zu dem Empfangen des jeweiligen Empfangssignalverlaufs oder nachträglich erfolgen. Insbesondere kann der jeweilige Empfangssignalverlauf zwischengespeichert werden. Das Identifizieren kann anhand des Auftretens von Maxima der Amplituden (Signalintensitäten) in dem jeweiligen Empfangssignalverlauf erfolgen. Insbesondere kann ein vorbestimmter oder variabler Schwellwert angewendet werden und ein Echosignal kann identifiziert werden, wenn die Amplitude (Signalintensität) in dem jeweiligen Empfangssignalverlauf den Schwellwert übersteigt.

Unter Trilaterieren ist insbesondere zu verstehen, dass die Lage des Reflexionspunkts anhand der zeitlichen Differenzen zwischen dem Aussenden des jeweiligen Sendesignals und dem Empfangen des jeweiligen zeitlich ersten Echosignals sowie anhand eines Abstands zwischen den jeweiligen Sende- und Empfangspositionen bestimmt wird. Insbesondere erlaubt die gemessene zeitliche Differenz zwischen dem Senden eines Sendesignals und dem Empfangen eines zeitlich ersten Echosignals die Bestimmung einer Entfernung von der zugehörigen Sende- und Empfangsposition zu dem Reflexionspunkt durch Multiplizieren der halben zeitlichen Differenz mit der Schallgeschwindigkeit. Die Lage des Reflexionspunkts ergibt sich dann insbesondere als Schnittpunkt eines Kreises um die erste Sende- und Empfangsposition mit der ersten bestimmten Entfernung als Radius mit einem Kreis um die zweite Sende- und Empfangsposition mit der zweiten bestimmten Entfernung als Radius.

Das "ausgewählte Echosignal" ist insbesondere das Echosignal, von dem zunächst hypothetisch angenommen wird, dass es ein Echosignal ist, das direkt, d. h. nur einmal, in dem seitlichen Umfeld reflektiert wurde und auf direktem Wege zu dem Ultraschall-Sendeempfänger zurückkehrte. Das "zeitlich darauffolgende" Echosignal ist insbesondere das nächste Echosignal, d. h. der nächste Impuls bzw. das nächste Maximum, das sich in demselben Echosignalverlauf findet. Insbesondere befindet sich zwischen dem ausgewählten und dem zeitlich darauffolgenden Echosignal kein weiteres Echosignal in demselben Echosignalverlauf. Von dem zeitlich darauffolgenden Echosignal wird zunächst hypothetisch angenommen, dass es ein Echosignal ist, das indirekt, d. h. mehrfach, in dem seitlichen Umfeld reflektiert wurde und somit auf indirektem Wege zu dem Ultraschall-Sendeempfänger zurückkehrte.

Lässt sich sodann bestimmen, dass das zeitlich nachfolgende Echosignal und das ausgewählte Echosignal zueinander gehören, d. h. von einem selben Hindernis reflektiert wurden, so wird bestimmt, dass das Hindernis hoch ist. Beispielsweise könnte das Hindernis ein Fahrzeug oder eine Hauswand sein, das ausgewählte Echosignal kann ein Echosignal sein, das direkt zu dem Ultraschall-Sendeempfänger reflektiert wurde, und das zeitliche nachfolgende Echosignal kann ein Echosignal sein, das auf indirektem Wege zunächst von dem Hindernis zum Boden und dann von dem Boden zum Ultraschall-Sendeempfänger reflektiert wurde. Liegt dagegen kein Doppelecho vor, so wird bestimmt, das das Hindernis, an dem sich derjenige Reflexionspunkt befindet, von dem das ausgewählte Echosignal reflektiert wurde, niedrig ist.

Unter "hoch" ist hierbei insbesondere eine Höhe zu verstehen, bei der ein Objekt bzw. Hindernis in dem seitlichen Umfeld beim Einparken nicht überfahren oder tangiert werden darf. Unter "niedrig" ist insbesondere eine Höhe zu verstehen, bei der ein Objekt, bzw. Hindernis in dem seitlichen Umfeld beim Einparken überfahren werden darf, also insbesondere und beispielsweise eine typische Höhe einer Bordsteinkante von beispielsweise maximal 15 cm.

Die Bestimmung, ob ein derartiges Doppelecho ausgebildet ist, kann aufgrund eines zeitlichen Abstands zwischen dem ausgewählten Echosignal und dem zeitlich nachfolgenden Echosignal und/oder anhand von Signaleigenschaften der jeweiligen Echosignale wie Signalintensitätsverhältnisse, Signalformen und dergleichen erfolgen.

Die Auswahl, welches von den mehreren Echosignalen in dem Echosignalverlauf als das ausgewählte Echosignal ausgewählt wird, erfolgt gemäß dem vorgeschlagenen Verfahren anhand der trilaterierten Lage des Reflexionspunkts des ersten Echosignals.

Somit kann je nach der trilaterierten Lage des Reflexionspunkts des ersten Echosignals die Doppelechobestimmung beispielsweise entweder anhand des ersten und des zweiten Echosignals oder aber anhand zeitlich späterer Echosignale, wie etwa anhand des zeitlich zweiten und des zeitlich dritten Echosignals durchgeführt werden.

Somit kann vorteilhafterweise ein zurückgesetztes Hindernis, das von einem weiteren Hindernis in dem seitlichen Umfeld verschattet wird, sichtbar gemacht werden.

Gemäß einer Ausführungsform wird bei dem vorgeschlagenen Verfahren in Schritt c) mindestens eine Lage eines zweiten Reflexionspunkts in dem seitlichen Umfeld trilateriert, von dem die zeitlich zweiten Echosignale in dem jeweiligen Empfangssignalverlauf reflektiert wurden, und das Auswählen eines Echosignals für eine Doppelechobestimmung in Schritt d) und/oder das Bestimmen in Schritt e), ob das ausgewählte Echosignal mit einem weiteren, zeitlich darauffolgenden Echosignal ein Doppelecho ausbildet, erfolgt abhängig von der in Schritt c) trilaterierten Lage des Reflexionspunkts des ausgewählten Echosignals und/oder von der in Schritt c) trilaterierten Lage des Reflexionspunkts des zeitlich darauffolgenden Echosignals.

Insbesondere können in Schritt c) neben der Lage des ersten Reflexionspunkts eine oder mehreren Lagen eines oder mehrerer weiterer Reflexionspunkte trilateriert werden. Insbesondere können in Schritt c) die Lage des ersten Reflexionspunkts, die Lage des zweiten Reflexionspunkts, die Lage eines dritten Reflexionspunkts und/oder die Lage eines vierten Reflexionspunkts trilateriert werden. Besonders bevorzugt kann in Schritt c) für zwei Empfangssignalverläufe für jedes n-te Echosignal in einem der zwei Empfangssignalverläufe, zu dem ein der zeitlichen Abfolge der Echosignale in dem jeweiligen Empfangssignalverlauf nach entsprechendes n-te Echosignal in dem anderen Empfangssignalverlauf identifiziert wurde, ein zugehöriger n-ter Reflexionspunkt trilateriert werden, wobei n eine Ganzzahl von 1 oder mehr ist. Entsprechend erfolgt dann das Auswählen eines Echosignals für eine Doppelechobestimmung in Schritt d) und ggf. das Bestimmen in Schritt e), ob das ausgewählte Echosignal mit einem weiteren, zeitlich darauffolgenden Echosignal ein Doppelecho ausbildet, abhängig von der in Schritt c) trilaterierten Lage des ersten, zweiten, dritten und/oder vierten Reflexionspunkts des ausgewählten Echosignals und ggf. von der in Schritt c) trilaterierten Lage des Reflexionspunkts des zeitlich darauffolgenden Echosignals, was dann dem zweiten, dritten, vierten bzw. fünften Reflexionspunkt entspricht.

Durch Trilaterieren der weiteren Reflexionspunkte kann es möglich sein, Verschattungen und fälschliche Doppelechobestimmungen noch zuverlässiger zu vermeiden.

Gemäß einer weiteren Ausführungsform wird in Schritt d) ein Echosignal in dem einen Empfangssignalverlauf für eine jeweilige Doppelechobestimmung ausgewählt, für dessen zugehörigen Reflexionspunkt in Schritt c) eine Lage trilateriert wurde, die gegenüber der zugehörigen Sende- und Empfangsposition des einen Empfangssignalverlaufs nicht lateral versetzt ist.

Als "lateral versetzt" gegenüber einer Sende- und Empfangsposition gilt eine Lage eines Reflexionspunkts insbesondere dann, wenn sie um mehr als einen Toleranzabstand von einer durch die Sende- und Empfangsposition verlaufenden transversalen Achse des Ultraschall-Sendeempfängers abweicht. Als "nicht lateral versetzt" gegenüber einer Sende- und empfangsposition gilt eine Lage eines Reflexionspunkts insbesondere dann, wenn sie um nicht mehr als den Toleranzabstand von der Sende- und Empfangsposition verlaufenden transversalen Achse des Ultraschall-Sendeempfängers abweicht. Der Toleranzabstand kann in Abhängigkeit von einem oder mehreren von einer Fahrgeschwindigkeit des Fahrzeugs, von einem Abstand zwischen Fahrzeug und dem seitlichen Umfeld, in dem Hindernisse vermutet werden, von einer Häufigkeit des Aussendens von Sendesignalen, und dergleichen bestimmt werden.

Somit können insbesondere Echosignale, die von im Vergleich zur transversalen Achse des Ultraschall-Sendeempfängers seitlich liegenden Reflexionspunkten auf seitlich versetzten Hindernissen aus einer schrägen Richtung zu dem Ultraschall-Sendeempfänger zurückkehren, noch bevor ein Echosignal von einem Reflexionspunkt entlang der transversalen Achse bei dem Ultraschall-Sendeempfänger eintrifft, nicht für die Doppelechobestimmung benutzt werden, und die zeitlich später eintreffenden Echosignale von dem in transversaler Richtung liegenden Hindernis können vorteilhafterweise für die Doppelechobestimmung und nachfolgende Höhenbestimmung benutzt werden.

Auf diese Weise kann vorteilhafterweise verhindert werden, dass ein zurückgesetzt positioniertes Hindernis von weiteren, lateral versetzten Hindernissen verschattet wird.

Gemäß einer weiteren Ausführungsform wird in Schritt d) das zeitlich zweite Echosignal in dem einen Empfangssignalverlauf für eine Doppelechobestimmung ausgewählt, falls die in Schritt c) trilaterierte Lage des ersten Reflexionspunkts gegenüber der zugehörigen Sende- und Empfangsposition des einen Empfangssignalverlaufs lateral versetzt ist; und andernfalls wird das zeitlich erste Echosignal ausgewählt.

In der Praxis kann es sich je nach verwendetem Ultraschall-Sendeempfänger und den sonstigen Gegebenheiten der Fahrsituation unter Umständen schwierig gestalten, auf Grundlage von weiteren Echosignalen, die zeitlich auf ein erstes Echosignal folgen, mit hinreichender Genauigkeit weitere Reflexionspunkte zu trilaterieren. Daher wird gemäß der vorliegenden Ausführungsform lediglich und ausschließlich die Lage des ersten Reflexionspunkts auf Grundlage des jeweils zeitlichen Echosignals in den beiden Echosignalverläufen trilateriert.

Die Erfinder haben erkannt, dass typische Verschattungen beim Vermessen von Parklücken in einem seitlichen Umfeld eines Fahrzeugs bereits dadurch wirksam beseitigt werden können, dass, falls der erste Reflexionspunkt lateral versetzt ist, die Doppelechobestimmung und Höhenbestimmung mit dem zweiten Echosignal als ausgewähltem Echosignal und dem dritten Echosignal als Kandidaten für eine mögliche Doppelechobestimmung durchgeführt wird. Vorteilhafterweise kann auf eine Trilateration der weiteren Reflexionspunkte verzichtet werden und insbesondere kann für eine Lagebestimmung des zweiten Reflexionspunkts angenommen werden, dass das zweite und das dritte Echosignal im Wesentlichen entlang der tangentialen Achse des Ultraschall-Sendeempfängers reflektiert worden sind.

Zwar findet auch an einem hohen, lateral versetzten Hindernis sowohl eine Einfachreflexion, d. h. eine Reflexion nur an dem Hindernis, sowie eine Doppelreflexion, d. h. eine Reflexion an dem Hindernis und an dem Boden, statt. Dieses findet jedoch in der Praxi häufig entweder nicht den Weg zurück zu dem Ultraschall-Sendeempfänger und/oder wird dort wegen zu geringer Signalintensität nicht mehr als eigenständiges Echosignal identifiziert.

Gemäß einer weiteren Ausführungsform wird in Schritt e) das Doppelecho nur unter der Bedingung festgestellt, dass für den dem zeitlich darauffolgenden Echosignal zugehörigen Reflexionspunkt in Schritt c) eine Lage trilateriert wurde, die gegenüber einer in Schritt c) für den dem ausgewählten Echosignal zugehörigen Reflexionspunkt trilaterierten Lage nicht lateral versetzt ist.

Als "lateral versetzt" gegenüber einer trilaterierten Lage eines Reflexionspunkts des ausgewählten Echosignals gilt eine Lage eines dem zeitlich darauffolgenden Echosignal zugehörigen Reflexionspunkts insbesondere dann, wenn die beiden Lage um mehr als einen Toleranzabstand voneinander abweichen. Als "nicht lateral versetzt" gelten die beiden Lagen sondere dann, wenn sie um nicht mehr als den Toleranzabstand voneinander abweichen. Der Toleranzabstand kann in Abhängigkeit von einem oder mehreren von einer Fahrgeschwindigkeit des Fahrzeugs, von einem Abstand zwischen Fahrzeug und dem seitlichen Umfeld, in dem Hindernisse vermutet werden, von einer Häufigkeit des Aussendens von Sendesignalen, und dergleichen bestimmt werden.

Sofern die Bedingungen eine Trilateration zeitlich nachfolgender Echosignale zulassen, kann gemäß der vorliegenden Ausführungsform vorteilhafterweise verhindert werden, das ein aus einer ersten Richtung reflektiertes Echosignal und ein zeitlich darauffolgendes, jedoch aus einer zweiten, davon verschiedenen Richtung reflektiertes Echosignal fälschlicherweise als ein Doppelecho ein und desselben Reflexionspunkts identifiziert werden. Somit lassen sich Verschattungs- und Überlagerungseffekte von Echosignalen verhindern, die an unterschiedlichen Hindernissen bzw. Objekten in dem seitlichen Umfeld reflektiert werden.

Gemäß einer weiteren Ausführungsform wird in Schritt d) das zeitlich zweite Echosignal in dem einen Empfangssignalverlauf für eine Doppelechobestimmung ausgewählt, falls die in Schritt c) trilaterierte Lage des ersten Reflexionspunkts gegenüber der zugehörigen Sende- und Empfangsposition des einen Empfangssignalverlaufs lateral versetzt ist; und andernfalls das zeitlich erste Echosignal ausgewählt wird.

Die Erfinder haben insbesondere erkannt, dass bei in der Praxis auftretenden Verschattungsposition bereits dadurch eine deutliche Verbesserung der Vermessung erzielt werden kann, wenn in Betracht gezogen wird, das Doppelecho anhand des zeitlich zweiten und des zeitlich dritten Echosignals eines Empfangssignalverlaufs zu bilden, falls für das zeitlich erste Echo des Empfangssignalverlauf eine lateral versetzte Lage trilateriert wird.

Insbesondere kann sich eine Trilateration von Lagen von Reflexionspunkten anhand zeitlich auf ein zeitlich erstes Echosignal nachfolgender Echosignale als schwieriger erweisen als die Trilateration anhand der zeitlich ersten Echosignale.

Gemäß der vorliegenden Ausführungsform kann vorteilhafterweise eine Verbesserung einer Verschattungsproblematik erzielt werden, ohne die Lagen zeitlich zweiter, dritter, ... Reflexionspunkte, von denen die zeitlich zweiten, dritten, ... Echosignale reflektiert wurden, zu trilaterieren.

Gemäß einer weiteren Ausführungsform wird in Schritt e) das Doppelecho nur dann festgestellt, wenn der zeitliche Abstand des ausgewählten und des zeitlich darauffolgenden Echosignals in dem einen Empfangssignalverlauf kleiner als ein vorbestimmter Maximalabstand ist.

Der vorbestimmte Maximalabstand kann unter Berücksichtigung einer zu erwartenden Verlängerung des Laufwegs eines doppelt reflektierten Echosignals gegenüber einem direkt reflektierten Echosignal bestimmt werden. Die zu erwartende Laufwegsverlängerung ist insbesondere abhängig von einer Einbauhöhe des Ultraschall-Sendeempfängers und eines zu erwartenden Abstands zwischen dem Fahrzeug und dem zu vermessenden Objekt. Zum Beispiel ergibt eine Laufwegsverlängerung von 50 cm unter Berücksichtigung der Schallgeschwindigkeit von 343 m/s eine zeitliche Differenz von ca. 1,5 ms. Der vorbestimmte Maximalabstand kann in einem Bereich zwischen 1 und 2 ms und vorzugsweise zu 2 ms gewählt werden.

Somit kann eine fälschliche Bestimmung eines Doppelechos anhand von Echosignalen, die an verschiedenen Reflexionspunkten reflektiert wurden, wirksam verhindert werden.

Gemäß einer weiteren Ausführungsform wird in Schritt e) das Doppelecho nur dann festgestellt, wenn eine Signalstärke des zeitlich darauffolgenden Echosignals nicht höher ist als eine Signalstärke des ausgewählten Echosignals und um nicht mehr als einen vorbestimmten Faktor von der Signalstärke des ausgewählten Echosignals abweicht.

Somit kann eine fälschliche Bestimmung eines Doppelechos anhand von Echosignalen, die an verschiedenen Objekten reflektiert wurden, wirksam verhindert werden.

Gemäß einer weiteren Ausführungsform wird ein Toleranzabstand für eine jeweilige Bestimmung, ob eine jeweilige trilaterierte Lage lateral versetzt ist oder nicht, in Abhängigkeit von einer Fahrgeschwindigkeit des Fahrzeugs gewählt.

Lediglich als ein Beispiel sei angenommen, dass das Fahrzeug mit 30 km/h an dem seitlichen Umfeld vorbeifahre. Für das Aussenden eines Sendesignals bis zum vollständigen Empfangen des Empfangssignalverlaufs seien unter Berücksichtigung der Schallgeschwindigkeit von 343 m/s und des typischen Abstands zu seitlich der Fahrbahn befindlichen Hindernissen bzw. Parklücken 40 ms veranschlagt. Dann ergibt sich, dass alle 33 cm eine Messung (Aussenden des Sendesignals und Empfangen des Empfangssignalverlaufs) erfolgt. Insofern kann in diesem Beispiel eine Lage eines Reflexionspunkts als seitlich versetzt gelten, wenn sich ihre laterale Lage um mehr als beispielsweise einen Toleranzabstand von 15 bis 20 cm von der lateralen Lage des Ultraschall-Sendeempfängers an der Sende- und Empfangsposition unterscheidet bzw. wenn die Lage des Reflexionspunkts um mehr als den Toleranzabstand von 15 bis 20 cm zu der transversalen Achse des Ultraschall-Sendeempfängers an der Sende- und Empfangsposition beabstandet ist.

Somit können vorteilhaft in der Praxis auftretende Ungenauigkeiten bei der Trilateration, Rauschproblematiken etc. dadurch kompensiert werden, dass kein lateraler Versatz angenommen wird, solange der laterale Versatz kleiner als der Toleranzabstand ist.

Gemäß einer weiteren Ausführungsform umfasst das vorgeschlagene Verfahren ferner g) Bestimmen einer Lage des Objekts, dessen Höhe in Schritt f) bestimmt wurde, anhand einer zeitlichen Differenz zwischen dem Empfangen des ausgewählten Echosignals in dem einen Empfangssignalverlauf und dem Aussenden des zugehörigen Sendesignals sowie anhand der transversalen Richtung quer zu der Fahrtrichtung des Fahrzeugs.

Insbesondere wird bei der vorliegenden Ausführungsform angenommen, dass infolge des in Schritt e) erfolgten Auswählens eines Echosignals unter Berücksichtigung der Lage mindestens des ersten Reflexionspunkts nun das Objekt, dessen Höhe anhand des solchermaßen ausgewählten Echosignals und des zeitlich darauffolgenden Echosignals bestimmt wurde, nicht lateral gegenüber der Sende- und Empfangsposition des Ultraschall-Sendeempfängers versetzt ist, d. h., im Wesentlichen im Bereich einer transversalen Achse des Ultraschall-Sendeempfängers angeordnet ist.

Somit ist vorteilhafterweise auch dann, wenn lediglich der erste Reflexionspunkts anhand der ersten Echosignale trilateriert wird, die Doppelechobestimmung und die Höhenbestimmung jedoch anhand zweiter und/oder weiterer Echosignale erfolgen, eine sinnvolle Lagebestimmung eines zweiten bzw. weiteren Reflexionspunkts und des zugehörigen Objekts möglich.

Gemäß einer weiteren Ausführungsform umfasst das vorgeschlagene Verfahren ferner g) Bestimmen einer Lage des Objekts, dessen Höhe in Schritt f) bestimmt wurde, als die in Schritt c) trilaterierte Lage des Reflexionspunkts, von dem das ausgewählte Echosignal reflektiert wurde.

Sofern jedoch die Lage des Reflexionspunkts, von dem das ausgewählte Echosignal reflektiert wurde, trilateriert wird, kann gemäß der vorliegenden Ausführungsform vorteilhafterweise eine noch exaktere Lagebestimmung des zugehörigen Objekts erfolgen.

Unter einem zweiten Aspekt wird ein Verfahren zum Einparken eines Fahrzeugs vorgeschlagen, das mit mindestens einem seitlichen Sendeempfänger und einem Parkassistenzsystem versehen ist. Das Verfahren umfasst: Durchführen des Verfahrens des ersten Aspekts wiederholt an mehreren Orten entlang einer Fahrtrichtung parallel zu einem seitlichen Umfeld des Fahrzeugs, um die Lagen und die Höhen eines oder mehrerer Objekte in dem seitlichen Umfeld des Fahrzeugs zu bestimmen; Bestimmen einer Parklücke in dem seitlichen Umfeld, die frei von Objekten ist, die als hoch bestimmt wurden; und Einparken des Fahrzeugs in die Parklücke mit Hilfe des Parkassistenzsystems.

Das Parkassistenzsystem kann dazu eingerichtet sein, Hinweise bzw. Anweisungen an einen menschlichen Fahrer des Fahrzeugs zum Ausführen entsprechender Lenk- und Fahrvorgänge zu geben. Auch kann das Parkassistenzsystem insbesondere zum teilautonomen oder vollautonomen Fahren des Fahrzeugs eingerichtet sein. Unter teilautonomem Fahren wird beispielsweise verstanden, dass das Parkassistenzsystem eine Lenkvorrichtung und/oder eine Fahrstufenautomatik steuert. Unter vollautonomem Fahren wird beispielsweise verstanden, dass das Parkassistenzsystem zusätzlich auch eine Antriebseinrichtung und eine Bremseinrichtung steuert.

Das Parkassistenzsystem kann insbesondere veranlassen, dass das Fahrzeug mit einer Geschwindigkeit von vorzugsweise nicht mehr als 40 km/h, besonders bevorzugt nicht mehr als 30 km/h und ganz besonders bevorzugt in Schrittgeschwindigkeit entlang einer Fahrtrichtung parallel zu dem seitlichen Umfeld des Fahrzeugs, in dem eine Parklücke vermutet wird, vorbeifährt und dabei das vorgeschlagene Verfahren wiederholt ausgeführt wird.

Die durch wiederholtes Durchführen des Verfahrens des ersten Aspekts ermittelten mehreren Lagen und Höhen können zusammengefasst bzw. mit einem Cluster-Verfahren geclustert werden. Dabei können anhand statistischer Kriterien Fehlbestimmungen bzw. weniger relevante Bestimmungen ausgefiltert werden und/oder ermittelt werden, welcher der bestimmten Lagen und Höhen zu gleichen bzw. unterschiedlichen Objekten gehören.

Unter einer Parklücke kann insbesondere ein Bereich in dem seitlichen Umfeld des Fahrzeugs verstanden werden, in dem keine als hoch bestimmten Objekte angeordnet sind, und dessen Abmessungen größer als die Abmessungen des Fahrzeugs sind, so dass ein paralleles, schräges oder queres Einparken des Fahrzeugs in den freien Bereich möglich ist.

Die Einparktrajektorie kann mathematisch und/oder unter Einsatz maschinellen Lernens, eines trainierten neuronalen Netzwerks oder dergleichen ermittelt werden.

Das Fahren des Fahrzeugs entlang der Einparktrajektorie kann unter Verwendung einer PID-Steuerung oder dergleichen veranlasst werden. Während des Fahrens können weitere Ultraschallmessungen gemäß dem vorgeschlagenen Verfahren des ersten Aspekts oder weitere Messungen mit anderen Arten von Sensoren erfolgen, um die gewonnen Informationen über das seitliche Umfeld laufend zu aktualisieren.

Unter einem dritten Aspekt wird ein Computerprogrammprodukt vorgeschlagen, das Befehle umfasst, die bei der Ausführung durch eine Computervorrichtung diese dazu veranlassen, das Verfahren gemäß dem ersten oder zweiten Aspekt auszuführen.

Ein Computerprogrammprodukt, wie z. B. ein Computerprogramm-Mittel, kann beispielsweise als Speichermedium, wie z. B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die Computervorrichtung kann insbesondere Teil des Parkassistenzsystems sein. Die Computervorrichtung kann ein eingebettetes Gerät, ein Steuergerät (ECU - Electronic Control Unit) des Fahrzeugs, ein Mikrocontroller, ein Industrie-PC oder dergleichen sein.

Unter einem vierten Aspekt wird eine Messvorrichtung für ein Parkassistenzsystem eines mit mindestens einem seitlichen Ultraschall-Sendeempfänger versehenen Fahrzeugs vorgeschlagen, wobei die Messvorrichtung zum Vermessen eines seitlichen Umfelds des Fahrzeugs eingerichtet ist und umfasst: a) eine erste Einheit, die dazu eingerichtet ist, den mindestens einen Ultraschall-Sendeempfänger an mindestens zwei Sende- und Empfangspositionen entlang einer lateralen Richtung, die eine Fahrtrichtung des Fahrzeugs ist, zum Aussenden eines ersten bzw. zweiten Sendesignals in einer transversalen Richtung quer zu der Fahrtrichtung und Empfangen eines jeweiligen aus dem seitlichen Umfeld reflektierten ersten bzw. zweiten Empfangssignalverlaufs anzusteuern; b) eine zweite Einheit, die dazu eingerichtet ist, eine Anzahl Echosignale in dem jeweiligen Empfangssignalverlauf zu identifizieren; c) eine dritte Einheit, die dazu eingerichtet ist, eine Lage eines ersten Reflexionspunkts in dem seitlichen Umfeld, von dem die zeitlich ersten Echosignale in dem jeweiligen Empfangssignalverlauf reflektiert wurden, zu trilaterieren; d) eine vierte Einheit, die dazu eingerichtet ist, aus der Anzahl Echosignale in einem der Empfangssignalverläufe ein ausgewähltes Echosignal für eine Doppelechobestimmung abhängig von mindestens der von der dritten Einheit trilaterierten Lage des ersten Reflexionspunkts der zeitlich ersten Echosignale auszuwählen; e) eine fünfte Einheit, die dazu eingerichtet ist, zu bestimmen, ob das ausgewählte Echosignal mit einem etwaigen weiteren, zeitlich darauffolgenden Echosignal ein Doppelecho ausbildet; und f) eine sechste Einheit, die dazu eingerichtet ist, eine Höhe eines Objekts in dem seitlichen Umfeld an einem Reflexionspunkt, an dem das ausgewählte Echosignal reflektiert wurde, als hoch zu bestimmen, falls die fünfte Einheit ein Doppelecho festgestellt hat, und als niedrig zu bestimmen, falls die fünfte Einheit kein Doppelecho festgestellt hat.

Die für das Verfahren des ersten Aspekts beschriebenen Merkmale, Vorteile und Ausführungsformen gelten entsprechend auch für die Messvorrichtung des vierten Aspekts.

Eine jeweilige der vorliegend genannten Einheiten kann hardwaretechnisch und/oder softwaretechnisch implementiert sein. Bei einer hardwaretechnischen Implementierung kann die entsprechende Einheit zum Beispiel als Computer oder als Mikroprozessor ausgebildet sein. Bei einer softwaretechnischen Implementierung kann die entsprechende Einheit als Computerprogrammprodukt, als eine Funktion, als eine Routine, als ein Algorithmus, als Teil eines Programmcodes oder als ausführbares Objekt ausgebildet sein. Ferner kann jede der vorliegend genannten Einheiten auch als Teil eines übergeordneten Steuerungssystems des Fahrzeugs, wie beispielsweise ein Steuergerät (ECU: Engine Control Unit), ausgebildet sein.

Unter einem fünften Aspekt wird ein Fahrzeug mit einem Parkassistenzsystem vorgeschlagen, das zum halb- oder vollautonomen Fahren des Fahrzeugs eingerichtet ist, wobei das Fahrzeug und/oder das Parkassistenzsystem die Messvorrichtung des vierten Aspekts umfasst.

Das Fahrzeug ist beispielsweise ein Personenkraftwagen oder Lastkraftwagen. Das Fahrzeug umfasst vorzugsweise eine Anzahl an Sensoreinheiten, die zum Erfassen des Fahrzustands des Fahrzeugs und zum Erfassen einer Umgebung des Fahrzeugs eingerichtet sind. Beispiele für derartige Sensoreinheiten des Fahrzeugs sind Bildaufnahmeeinrichtungen, wie eine Kamera, ein Radar (engl. radio detection and ranging) oder auch ein Lidar (engl. light detection and ranging), Ultraschallsensoren, Ortungssensoren, Radwinkelsensoren und/oder Raddrehzahlsensoren. Die Sensoreinheiten sind insbesondere jeweils zum Ausgeben eines Sensorsignals eingerichtet, beispielsweise an das Parkassistenzsystem, welches das teil- oder vollautonome Fahren in Abhängigkeit der erfassten Sensorsignale durchführt.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt eine schematische Ansicht eines Fahrzeugs aus einer Vogelperspektive;
- Fig. 2: zeigt eine schematische Ansicht eines Ultraschall-Sendeempfängers aus der Vogelperspektive;
- Fig. 3: zeigt eine schematische Ansicht des Ultraschall-Sendeempfängers bei Betrachtung entlang einer Fahrzeug-Längsrichtung;
- Fig. 4: zeigt eine Auftragung einer Intensität eines von dem Ultraschall-Sendeempfänger ausgesendete Sendesignals;
- Fig. 5: zeigt eine Auftragung eines Empfangssignalverlaufs;
- Fig. 6: zeigt eine schematische Darstellung zur Veranschaulichung des Ausbildens eines Doppelechos im Falle eines hohen Hindernisses;
- Fig. 7: zeigt eine schematische Darstellung zur Veranschaulichung des Ausbleibens eines Doppelechos im Falle eines niedrigen Hindernisses;
- Fig. 8: zeigt eine schematische Darstellung zur Veranschaulichung des Trilaterierens;
- Fig. 9: zeigt ein Flussablaufdiagramm eines Verfahrens zum Vermessen eines seitlichen Umfelds des Fahrzeugs aus Fig. 1 gemäß Ausführungsbeispielen;
- Fig. 10: zeigt ein funktionales Blockdiagramm einer entsprechenden Messvorrichtung gemäß Ausführungsbeispielen;
- Fig. 11: zeigt eine zweidimensionale Auftragung von rohen Messdaten gemäß einem ersten Ausführungsbeispiel;
- Fig. 12: zeigt eine zweidimensionale Auftragung der Messdaten gemäß dem ersten Ausführungsbeispiel nach Trilaterieren der ersten Reflexionspunkte;
- Fig. 13: zeigt eine zweidimensionale Auftragung von rohen Messdaten gemäß einem zweiten Ausführungsbeispiel; und
- Fig. 14: zeigt eine zweidimensionale Auftragung der Messdaten gemäß dem zweiten Ausführungsbeispiel nach Trilaterieren aller Reflexionspunkte.

In den Figuren sind gleiche oder funktionsgleiche Elemente mit denselben Bezugszeichen versehen worden, sofern nichts anderes angegeben ist.

Es werden beispielhaft grundlegende Konfigurationen und Prinzipien der Abstands-, Lagen- und Höhenbestimmung in einem seitlichen Umfeld eines Fahrzeugs erläutert, die für alle Ausführungsformen und Ausführungsbeispiele der Erfindung gelten können.

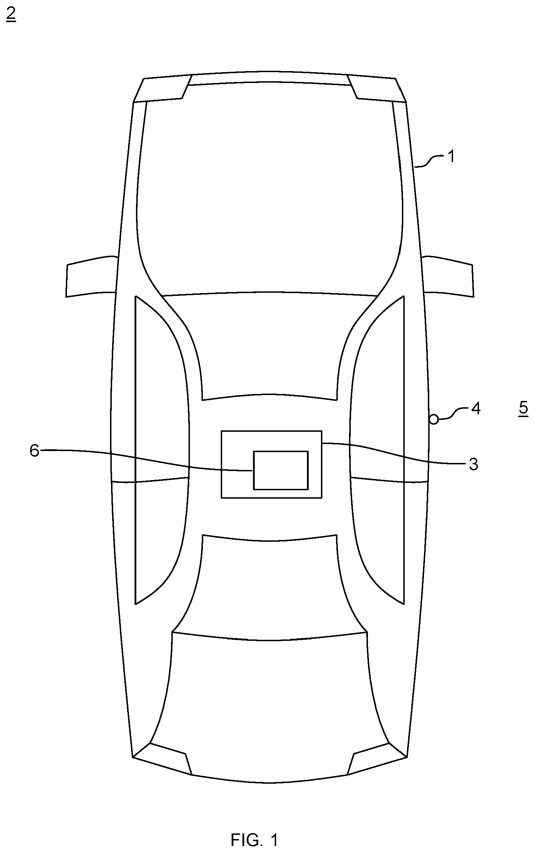

Fig. 1 zeigt eine schematische Ansicht eines Fahrzeugs 1 aus einer Vogelperspektive. Das Fahrzeug 1 ist beispielsweise ein Auto, das in einem Umfeld 2 angeordnet ist. Das Auto 1 weist ein Parkassistenzsystem 3 auf, das beispielsweise als ein Steuergerät ausgebildet ist. Zudem sind an dem Auto 1 eine Mehrzahl an Umgebungssensoreinrichtungen (nicht alle sind gezeigt) angeordnet. Die Mehrzahl Umgebungssensoreinrichtungen umfasst insbesondere einen seitlichen Ultraschall-Sendeempfänger 4. Der Ultraschall-Sendeempfänger 4 ist dazu eingerichtet, ein Ultraschall-Sendesignal in das Umfeld 2 und speziell in einen als seitliches Umfeld 5 bezeichneten Bereich des Umfelds 2 des Fahrzeugs 1 auszusenden und einen Ultraschall-Empfangssignalverlauf aus dem seitlichen Umfeld 5 zu empfangen. Das Parkassistenzsystem 3 umfasst insbesondere eine Messvorrichtung 6. Die Messvorrichtung 6 ist dazu eingerichtet, unter Verwendung des Ultraschall-Sendeempfängers 4 gemäß dem vorgeschlagenen Verfahren die Lagen und Höhen von Objekten (Hindernissen) in dem seitlichen Umfeld 5 zu bestimmen und an das Parkassistenzsystem 3 auszugeben. Mittels der von den Umgebungssensoreinrichtungen erfassten Sensorsignale und den von der Messvorrichtung 3 bestimmten Lagen und Höhen ist das Parkassistenzsystem 2 in der Lage, das Auto 1 teilautonom oder auch vollautonom zu fahren und insbesondere in eine Parklücke (nicht gezeigt) in dem seitlichen Umfeld 5 einzuparken. Neben dem in der Fig. 1 dargestellten Ultraschall-Sendeempfänger 4 kann vorgesehen sein, dass das Fahrzeug 1 weitere Sensoreinrichtungen aufweist. Beispiele hierfür sind weitere Ultraschall-Sendeempfänger, optische Sensoren, visuelle Kameras, ein Radar und/oder ein Lidar, ein Mikrofon, ein Beschleunigungssensor, eine Antenne mit gekoppeltem Empfänger zum Empfangen von elektromagnetisch übertragbaren Datensignalen, und dergleichen mehr.

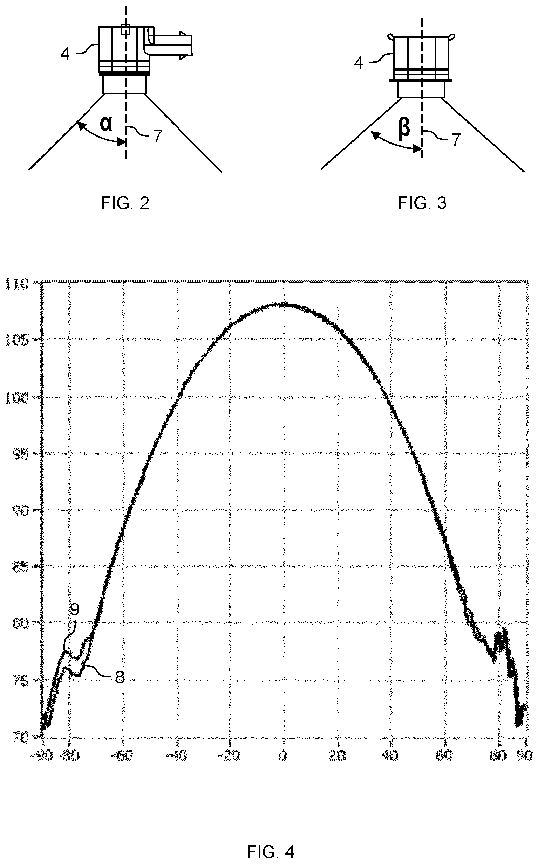

Fig. 2 zeigt eine schematische Ansicht eines Ultraschall-Sendeempfängers 4 aus der Vogelperspektive, Fig. 3 zeigt eine schematische Ansicht des Ultraschall-Sendeempfängers 4 bei Betrachtung entlang einer Fahrzeug-Längsrichtung, und Fig. 4 zeigt eine Auftragung einer Intensität eines von dem Ultraschall-Sendeempfänger 4 ausgesendeten Sendesignals.

Der Ultraschall-Sendeempfänger 4 sendet ein Sendesignal entlang einer transversalen Achse 7 aus. Die transversale Achse 7 ist, wenn der Ultraschall-Sendeempfänger 4 als seitlicher Ultraschall-Sendeempfänger 4 an einer Seite des Fahrzeugs 1 (Fig. 1) angeordnet ist, quer zu dem Fahrzeug 1 (Fig. 1), d. h. quer zu einer Front-Heck-Richtung bzw. Längsrichtung des Fahrzeugs 1 (Fig. 1), angeordnet. Das ausgesendete Sendesignal umfasst eine Signalkeule, d. h., es weist in horizontaler Richtung einen Öffnungswinkel α und in vertikaler Richtung einen Öffnungswinkel β auf. Der von den Öffnungswinkeln α bzw. β aufgespannte Kegel beschreibt eine dreidimensionale Fläche, bei welcher eine Signalintensität des ausgestrahlten Ultraschall-Sendesignals um einen vorbestimmten Faktor gegenüber der maximalen Signalintensität auf der transversalen Achse reduziert ist. In Fig. 4 ist auf der x-Achse ein Winkel gegen die transversale Achse und auf der y-Achse eine Signalintensität (Schalldruckpegel in dB) aufgetragen. Die Kurve 8 beschreibt einen Verlauf der Signalintensität in einer horizontalen Ebene und die Kurve 9 den Verlauf der Signalintensität einer vertikalen Ebene, wobei die horizontale Ebene und die vertikale Ebene jeweils durch die transversale Achse 7 verlaufen.

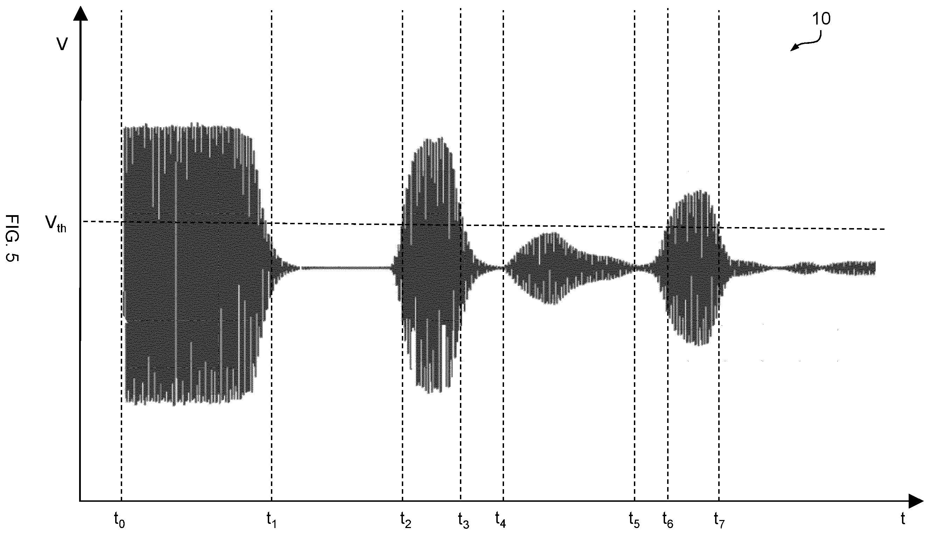

Es wird auf Fig. 1 bis Fig. 5 Bezug genommen. Fig. 5 zeigt eine Auftragung eines Empfangssignalverlaufs 10, der von dem Ultraschall-Sendeempfänger 4 in Reaktion auf das Aussenden des Sendesignals empfangen wird. Auf der horizontalen Achse ist die Zeit t aufgetragen, und auf der vertikalen Achse ist eine von dem Ultraschall-Sendeempfänger 4 ausgegebene Sensorspannung aufgetragen, die eine von dem Ultraschall-Sendeempfänger 4 erfassten Empfangssignalintensität, d. h., einen erfassten Schalldruck, angibt.

Zum Zeitpunkt t₀ sendet der Ultraschall-Sendeempfänger 4 ein Sendesignal aus. Von der Zeit t₀ bis zur Zeit t₁ registriert der Ultraschall-Sendeempfänger unmittelbar ein Nachhallen des ausgesendeten Sendesignals. Der Bereich des Empfangssignalverlaufs 10 von t₀ bis t₁ kann daher keine Informationen über das seitliche Umfeld 5 des Fahrzeugs 1 enthalten und wird beispielsweise ausgeblendet. Zum Zeitpunkt t₂ nimmt die Amplitude der empfangenen Signalintensität zu, da ein erstes Echosignal aus dem seitlichen Umfeld 5 des Fahrzeugs 1 eintrifft. Der Zeitpunkt t₂ in dem Empfangssignalverlauf 10 kann als Empfangszeitpunkt des ersten Echosignals in dem Empfangssignalverlauf 10 identifiziert werden. Zu einem Zeitpunkt t₄ steigt die Amplitude der empfangenen Signalintensität erneut an, erreicht aber nicht eine Schwellspannung Vₜₕ. Der Bereich von t₄ bis t₅ kann daher nicht als Echosignal identifiziert, sondern als Störsignal betrachtet werden. Vom Zeitpunkt t₆ bis zum Zeitpunkt t₇ wird ein zweites Echosignal aus dem seitlichen Umfeld 5 des Fahrzeugs empfangen, welches die Schwellspannung Vₜₕ überschreitet. Der Zeitpunkt t₆ kann somit als Empfangszeitpunkt eines zweiten Echosignals in dem Empfangssignalverlauf 10 identifiziert werden.

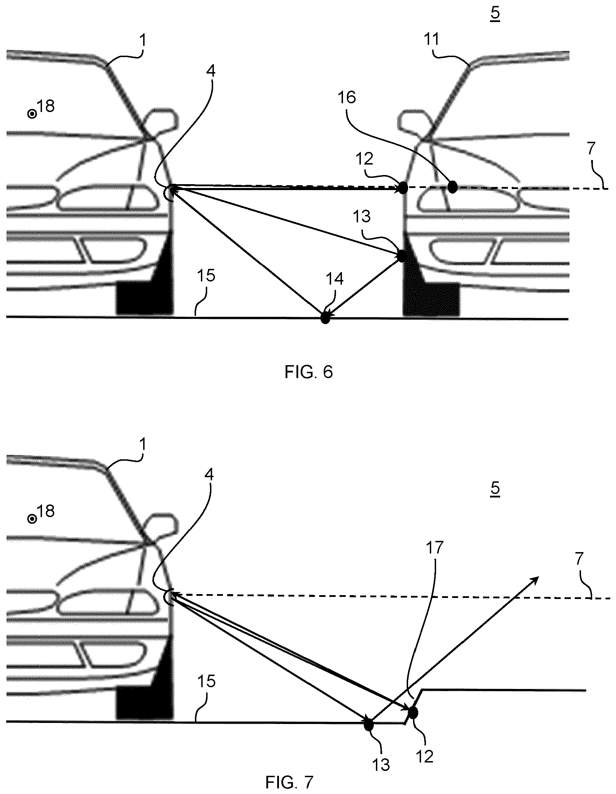

Fig. 6 zeigt eine schematische Darstellung zur Veranschaulichung des Ausbildens eines Doppelechos im Falle eines hohen Hindernisses, und Fig. 7 zeigt eine schematische Darstellung zur Veranschaulichung des Ausbleibens eines Doppelechos im Falle eines niedrigen Hindernisses. Fig. 6 und Fig. 7 werden unter Rückbezug auf die Fig. 5 und 1 beschreiben. Pfeile in Fig. 6, 7 veranschaulichen Ausbreitungswege von Sende- bzw. Echosignalen.

In Fig. 6 ist gezeigt, wie das Fahrzeug 1 an einem geparkten Fahrzeug 11 (Objekt, Hindernis) entlang einer lateralen Fahrtrichtung 18 vorbeifährt. Das von dem Ultraschall-Sendeempfänger 4 zum Zeitpunkt t₀ ausgesendete Sendesignal breitet sich entlang der transversalen Achse 7 des Fahrzeugs 1 zu einem ersten Punkt 12 auf einer Oberfläche des geparkten Fahrzeugs 11 aus, wird von dort reflektiert, und das reflektierte Echosignal breitet sich zurück entlang der transversalen Achse 7 aus und erreicht zum Zeitpunkt t₂ wieder den Ultraschall-Sendeempfänger 4. Die Entfernung zwischen dem Ultraschall-Sendeempfänger 4 und dem ersten Punkt 12 kann durch Multiplizieren der zeitlichen Differenz zwischen t₂ und t₀ mit der Schallgeschwindigkeit von 343 m/s und anschließendes Dividieren durch zwei bestimmt werden. Der erste Punkt 12 ist somit ein erster Reflexionspunkt 12, dessen Entfernung anhand des zur Zeit t₂ auftretenden ersten Echosignals bestimmbar ist.

Eine weitere Komponente der Signalkeule des Sendesignals breitet sich in einer von der transversalen Achse 7 divergierenden Richtung zu einem zweiten Punkt 13 an der Oberfläche des geparkten Fahrzeugs 11 aus, wird von dort als zweites Echosignal zu einem dritten Punkt 14 auf einem Boden 15 und von dort weiter zurück zu dem Sendeempfänger 4 reflektiert, wo es zum Zeitpunkt t₆ eintrifft. Beim Auswerten des Empfangssignalverlaufs 10 liegen jedoch keine Informationen über den tatsächlichen Verlauf der Wegstrecke der eintreffenden Echosignale vor. Daher wird auf die gleiche Weise, wie vorstehend für den ersten Reflexionspunkt 12 beschrieben, eine Entfernung zu einem zweiten, virtuellen Reflexionspunkt 16 bestimmt, dessen Lage wie in Fig. 6 gezeigt auf der transversalen Achse 7 in einer Entfernung angenommen wird, die der halben Signallaufzeit zwischen Aussenden des Sendesignals zur Zeit t₀ und Eintreffen des zweiten Echosignals zur Zeit t₆ entspricht.

Der zweite Reflexionspunkt 16 wird auch als "virtueller" Reflexionspunkt bezeichnet, weil in der für ihn ermittelten Entfernung zu dem Ultraschall-Sendeempfänger 4- oder an seiner für seine trilaterierte Lage, falls, wie später beschrieben eine Trilateration erfolgt - nicht tatsächlich eine Reflexion erfolgte. Vielmehr wird für einen solchen virtuellen Reflexionspunkt eine Entfernung bzw. durch Trilateration eine Lage bestimmt, an welcher eine Reflexion erfolgt wäre, wäre das zugehörige Echosignal nur einmal und nicht mehrfach reflektiert worden.

In Fig. 7 ist gezeigt, wie das Fahrzeug 1 an einer Bordsteinkante 17 entlang einer lateralen Fahrtrichtung 18 vorbeifährt. Eine Komponente der Signalkeule des zum Zeitpunkt t₀ ausgesendeten Sendesignals breitet sich von dem Ultraschall-Sendeempfänger 4 zu einem ersten Punkt 12 auf der Bordsteinkante 17 aus, wird von dort reflektiert, und das reflektierte Echosignal erreicht den Ultraschall-Sendeempfänger 4 zum Zeitpunkt t₂. Der erste Punkt 12 ist somit ein erster Reflexionspunkt 12, dessen Entfernung anhand des ersten Echosignals bei t₂ auf gleiche Weise wie bei der in Fig. 6 gezeigten Fahrsituation bestimmt wird. Zwar kann es auch hier, ähnlich wie in Fig. 6 gezeigt, zu einer Doppelreflexion an der Bordsteinkante 17 und anschließend an dem Boden 15 kommen, jedoch ist in diesem Fall die Zeitdifferenz zwischen Eintreffen des doppelt reflektierten Echosignals und des einfach reflektierten Echosignals so gering, dass beide Echosignale in dem Empfangssignalverlauf 10 als ein einzelnes, erstes Echosignal identifiziert werden. Eine weitere Komponente der Keule des Sendesignals breitet sich zu einem zweiten Punkt 13 auf dem Boden 15 aus, und wird von dort weiter weg von dem Fahrzeug 1 reflektiert, ohne den Ultraschall-Sendeempfänger 4 zu erreichen.

Somit kann bestimmt werden, dass ein hohes Hindernis 11 in dem seitlichen Umfeld 5 des Fahrzeugs 1 vorliegt, wenn in dem Empfangssignalverlauf 10 zwei Echosignale identifiziert werden können, die bestimmte Kriterien erfüllen, so dass sie ein Doppelecho ausbilden, während ein niedriges Hindernis 17 in dem seitlichen Umfeld 5 vorliegt, wenn in dem Empfangssignalverlauf 10 nur ein Echosignal identifiziert werden kann und/oder zwei Echosignale identifiziert werden können, diese aber die bestimmten Kriterien nicht erfüllen.

Ein Kriterium für eine Doppelechobestimmung kann sein, dass das zweite Echosignal eine niedrigere Intensität als das erste Echosignal aufweist. Ein weiteres Kriterium kann sein, dass eine zeitliche Differenz zwischen dem Eintreffen des zweiten Echosignals und dem Eintreffen des ersten Echosignals einem zu erwartenden Längenunterschied zwischen einem direkten Reflexionsweg (4, 12, 4 in Fig. 6) und einem indirekten Reflexionsweg (4, 13, 14, 4 in Fig. 6) entspricht. Vorzugsweise kann ein maximaler zeitlichen Abstand zwischen zwei Echosignalen, bei dem ein Doppelecho bestimmt wird, auf 2 ms festgelegt sein, was einem Längenunterschied der Reflexionswege von ca. 69 cm entspricht. Anders ausgedrückt kann in einem Beispiel ein Doppelecho nur bestimmt werden, wenn der zweite, virtuelle Reflexionspunkt 16 nicht mehr als 34,5 cm hinter dem ersten Reflexionspunkt 12 liegt.

Im Weiteren wird zur besseren Anschaulichkeit auch davon gesprochen, dass zwei Reflexionspunkte (beispielsweise der erste Reflexionspunkt 12 und der zweite, virtuelle Reflexionspunkt 16 in Fig. 6) ein Doppelecho ausbilden. Gemeint ist mit einer solchen Formulierung jedoch stets, dass die zugehörigen Echosignale, anhand welcher die Abstände zu den betreffenden Reflexionspunkten 12, 16 bestimmt wurden, ein Doppelecho ausbilden.

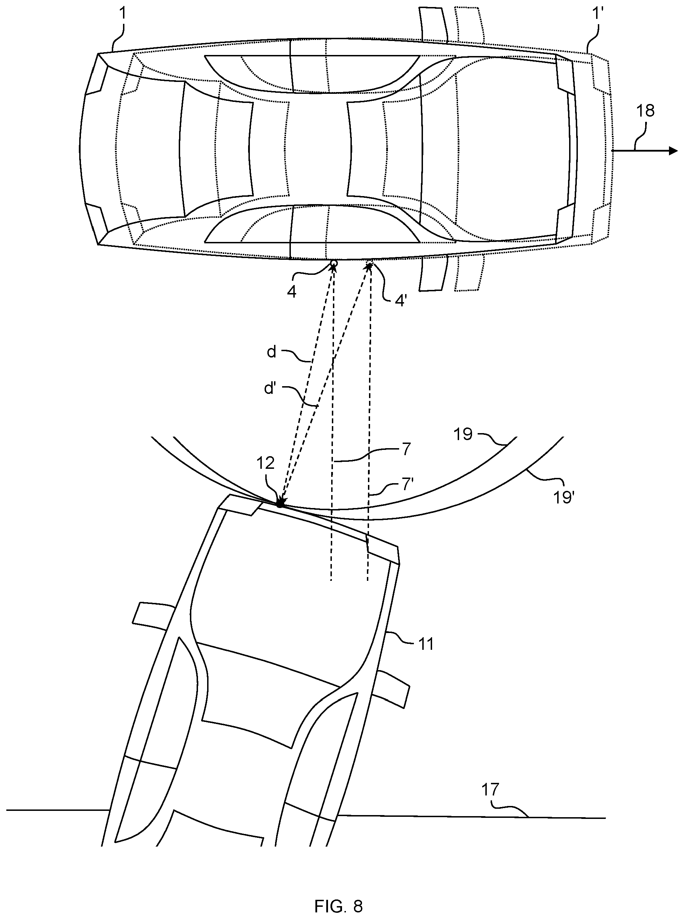

Fig. 8 zeigt eine schematische Darstellung zur Veranschaulichung des Trilaterierens einer Lage eines Reflexionspunkts 12. Fig. 8 zeigt das Fahrzeug 1, 1' beim Vorbeifahren, in einer lateralen Richtung 18, an einer Bordsteinkante 17 (niedriges Hindernis bzw. Objekt), auf der ein geparktes weiteres Fahrzeug 11 (hohes Hindernis bzw. Objekt) diagonal geparkt ist. Das Fahrzeug ist mit Bezugszeichen 1 zu einem ersten Zeitpunkt und mit Bezugszeichen 1' zu einem zweiten Zeitpunkt gezeigt. Entsprechend ist der Ultraschall-Sendeempfänger 4, 4' mit Bezugszeichen 4 an einer ersten Sende- und Empfangsposition zu dem ersten Zeitpunkt und mit Bezugszeichen 4' an einer zweiten Sende- und. Empfangsposition zu dem zweiten Zeitpunkt gezeigt.

Zu dem ersten Zeitpunkt an der ersten Sende- und Empfangsposition des Ultraschall-Sendeempfängers 4 wird auf die vorstehend anhand von Fig. 5 bis 7 beschriebene Weise ein Sendesignal ausgesendet und ein Empfangssignalverlauf empfangen und anhand eines Zeitpunkts, zu dem ein Echosignal in dem Empfangssignalverlauf identifiziert wird, eine Entfernung d zu einem ersten Reflexionspunkt 12 bestimmt, an dem das Echosignal reflektiert wurde. Zu dem zweiten Zeitpunkt wird an der zweiten Sende- und Empfangsposition des Ultraschall-Sendeempfängers 4 auf dieselbe Weise eine Entfernung d' zu dem ersten Reflexionspunkt 12 bestimmt. Die Lage des ersten Reflexionspunkts 12 ergibt sich dann als Schnittpunkt eines Kreises 19 mit Radius d um die erste Sende- und Empfangsposition bei 4 als Mittelpunkt mit einem Kreis 19' mit Radius d' um die zweite Sende- und Empfangsposition bei 4' als Mittelpunkt. In der in Fig. 8 gezeigten Fahrsituation ergibt sich somit eine Lage des Reflexionspunkts 12, die lateral gegen die transversalen Achsen 7, 7' des Ultraschall-Sendeempfängers 4, 4' versetzt ist. Durch das Trilaterieren kann somit die tatsächliche Lage des Reflexionspunkts 12 gegenüber einer zunächst angenommen Lage an einem jeweiligen Schnittpunkt der transversalen Achsen 7, 7' mit den Kreisen 19, 19' präzisiert werden.

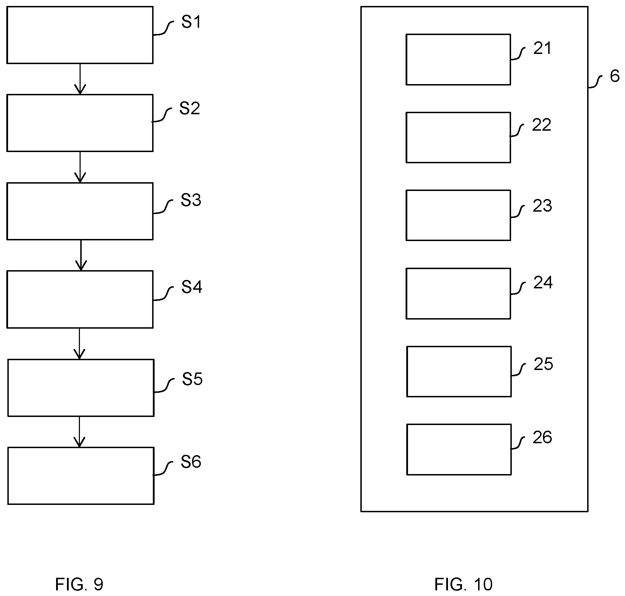

Fig. 9 zeigt ein Flussablaufdiagramm eines Verfahrens und Fig. 10 zeigt ein funktionales Blockdiagramm einer Messvorrichtung 6 zum Vermessen des seitlichen Umfelds 5 des Fahrzeugs 1 gemäß Ausführungsbeispielen. Es wird auf Fig. 9 und Fig. 10 in Verbindung mit Fig. 1, Fig. 8 Bezug genommen.

Die Messvorrichtung 6 umfasst eine erste bis sechste Einheit 21-26. In Schritt S1 des vorgeschlagenen Verfahrens steuert die erste Einheit 21 der Messvorrichtung 6 zu einem ersten Zeitpunkt an einer ersten Sende- und Empfangsposition bei 4 den Ultraschall-Sendeempfänger 4 an und veranlasst diesen dadurch dazu, ein erstes Sendesignal entlang der transversalen Achse 7 auszusenden und aus dem seitlichen Umfeld 5 einen ersten reflektierten Empfangssignalverlauf zu empfangen. Zu einem zweiten Zeitpunkt an einer zweiten Sende- und Empfangsposition bei 4' steuert die erste Einheit 21 den Ultraschall-Sendeempfänger 4' an und veranlasst diesen dadurch, ein zweites Sendesignal entlang der transversalen Achse 7' auszusenden und aus dem seitlichen Umfeld 5 einen zweiten reflektierten Empfangssignalverlauf zu empfangen. Die empfangenen Empfangssignalverläufe werden der Messvorrichtung 6 bereitgestellt.

In Schritt S2 des vorgeschlagenen Verfahrens identifiziert die zweite Einheit 22 eine Anzahl Echosignale in dem jeweiligen Empfangssignalverlauf (10 in Fig. 5). Vorzugsweise identifiziert die zweite Einheit 21 hierbei alle Echosignale in dem jeweiligen Empfangssignalverlauf, deren Signalintensität über einer vorbestimmten oder variablen Schwelle (Vth in Fig. 5) liegt.

In Schritt S3 trilateriert die dritte Einheit 23 eine Lage eines ersten Reflexionspunkts 12 in dem seitlichen Umfeld 5, von dem die zeitlich ersten Echosignale in dem ersten und dem zweiten Empfangssignalverlauf reflektiert wurden.

In Schritt S4 wählt die vierte Einheit 24 der Messvorrichtung 6 zunächst einen der beiden Empfangssignalverläufe aus, der im Weiteren als "erster" oder "ausgewählter" Empfangssignalverlauf bezeichnet wird. Sodann wählt die vierte Einheit 24 in dem ausgewählten Empfangssignalverlauf eines der identifizierten Echosignale für eine Doppelechobestimmung aus.

Gemäß dem vorgeschlagenen Verfahren erfolgt diese Auswahl abhängig mindestens von der in Schritt S3 von der dritten Einheit 23 trilaterierten Lage des ersten Reflexionspunkts 12, von dem die zeitlichen ersten Echosignale in den beiden Empfangssignalverläufen reflektiert wurden. Je nach der trilaterierten Lage des ersten Reflexionspunkts 12 werden beispielsweise die zeitlich ersten Echosignale in den beiden Empfangssignalverläufen oder auch andere, beispielsweise die zeitlich zweiten oder die zeitlich dritten Echosignale in den beiden Empfangssignalverläufen für die Doppelechobestimmung ausgewählt. Kriterien dieser Auswahl werden nachstehend anhand von Ausführungsbeispielen illustriert.

In Schritt S5 bestimmt die fünfte Einheit 25, ob das ausgewählte Echosignal mit einem etwaigen weiteren, zeitlich darauffolgenden Echosignal ein Doppelecho ausbildet.

In Schritt S6 bestimmt die sechste Einheit 26 eine Höhe eines Objekts 11 in dem seitlichen Umfeld 5 an einem Reflexionspunkt 12, an dem das ausgewählte Echosignal reflektiert wurde, als hoch, falls in Schritt e) ein Doppelecho festgestellt wird, und als niedrig, falls kein Doppelecho festgestellt wird.

Für Einzelheiten der Doppelecho- und Höhenbestimmung sei insbesondere auf die vorstehend anhand der Fig. 4 bis 7 gegebene Beschreibung verwiesen, mit der Maßgabe, dass die Doppelechobestimmung nicht notwendigerweise anhand des zeitlich ersten Echosignals, das zum Zeitpunkt t₂ in dem Empfangssignalverlauf 10 (Fig. 5) auftritt, und des zeitlich darauffolgenden zweiten Echosignals, das zum Zeitpunkt t₆ in dem Empfangssignalverlauf 10 (Fig. 5) auftritt, erfolgen muss, sondern, je nach Ergebnis des Trilaterierens in Schritt S3 auch anhand des zeitlich zweiten, zum Zeitpunkt t₆ aufgetretenen Echosignals und eines zeitlich darauffolgenden, in Fig. 5 nicht gezeigten, zeitlich dritten Echosignals erfolgen kann.

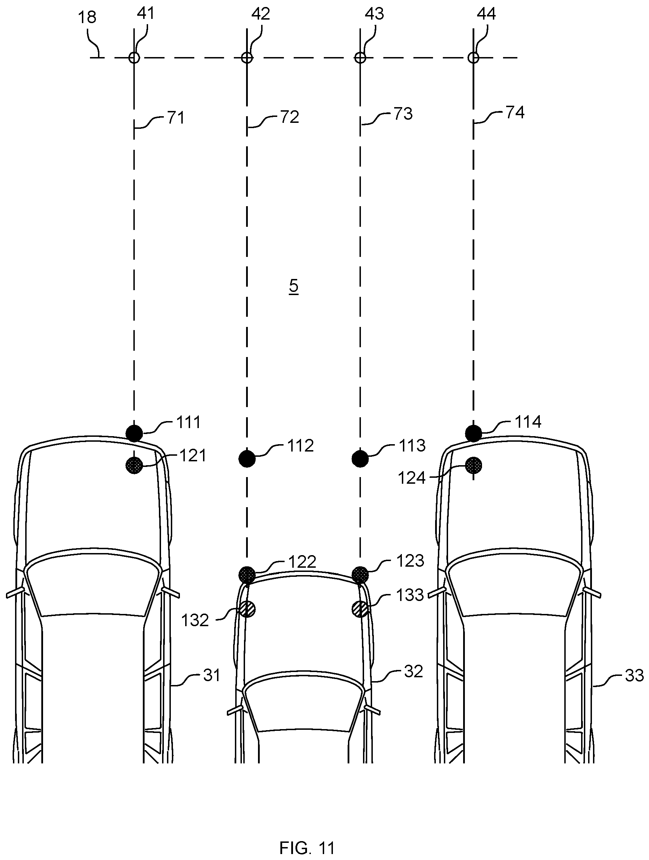

Fig. 11 zeigt eine zweidimensionale Auftragung von rohen Messdaten in einem seitlichen Umfeld 5 des Fahrzeugs 1 (Fig. 8) gemäß einem ersten Ausführungsbeispiel.

In dem seitlichen Umfeld 5 parken lateral nebeneinander und parallel zu der transversalen Richtung mehrere Fahrzeuge 31, 32, 33 (Objekte, Hindernisse). Hierbei ist die Front des in der Mitte parkenden Fahrzeugs 32 gegenüber den Fronten der zu beiden Seite parkenden Fahrzeuge 31, 33 deutlich in transversaler Richtung zurückgesetzt.

Die rohen Messdaten wurden gewonnen, indem das in Fig. 11 nicht gezeigte Fahrzeug 1 (Fig. 8) mit der Messvorrichtung 7 (Fig. 1) entlang einer lateral Fahrtrichtung 18 gefahren und an mehreren Messorten 41-44 wiederholt das vorgeschlagene Verfahren ausgeführt wurde.

Die Richtung der transversalen Achsen 71-74 des Ultraschall-Sendeempfängers 4 (Fig. 8) des Fahrzeugs 1 (Fig. 8) wird vorliegend als transversale Richtung, und die Fahrtrichtung des Fahrzeugs 1 (Fig. 8) entlang der Messorte 41-44 als die laterale Richtung 18 bezeichnet.

An den Messorten 41-44 befinden sich die jeweiligen ersten Sende- und Empfangspositionen des Ultraschall-Sendeempfängers 4 des Fahrzeugs 1 (Fig. 8), an denen ein jeweiliges erstes Echosignal ausgesendet und ein erster Echosignalverlauf empfangen wurde. Die zugehörigen zweiten Sende- und Empfangspositionen, an denen zu Zwecken der Trilateration ein jeweiliges zweites Sendesignal ausgesendet und ein zweiter Echosignalverlauf empfangen wurde, sind in Fig. 11 nicht dargestellt. Sie befinden sich zwischen den jeweiligen Messorten 41-44, insbesondere auf halber Strecke zwischen zwei jeweiligen Messorten 41; 42, 42;43, 43; 44.

Mit "rohe Messdaten" ist gemeint, dass in Fig. 11 unpräzisierte, rohe Lagen der Reflexionspunkte 111-133 der jeweiligen Echosignale unter der Annahme aufgetragen sind, dass die ersten Echosignale entlang der jeweiligen transversalen Achsen 71, 72, 73, 74 des Ultraschall-Sendeempfängers 4 (Fig. 1, 8) direkt reflektiert wurden.

Im Speziellen zeigt Fig. 11: als ausgefüllte Punkte die ersten Reflexionspunkte 111, 112, 113, 114, deren Entfernungen anhand der zeitlich ersten Echosignale der jeweiligen ersten Empfangssignalverläufe bestimmt wurden; als doppelt schraffierte Punkte die zweiten Reflexionspunkte 121, 122, 123, 124, deren Entfernungen anhand der zeitlich zweiten Echosignale der jeweiligen ersten Empfangssignalverläufe bestimmt wurden, sowie als einfach schraffierte Punkte zwei dritte Reflexionspunkte 132, 133, deren Entfernungen anhand zeitlich dritter Echosignale in dem ersten Empfangssignalverlauf am zweiten Messort 42 und in dem ersten Empfangssignalverlauf an dem dritten Messort 43 bestimmt wurden. An dem ersten Messort 41 und an dem vierten Messort 44 wurden keine zeitlich dritten Echosignale identifiziert.

In Fig. 11 verdient die Messung am Messort 42 besondere Beachtung. Der Reflexionspunkt 112 geht auf ein zeitlich erstes Echosignal zurück, das an dem in Bezug auf den Messort 42 lateral versetzt geparkten Fahrzeug 31 schräg reflektiert wird und den Ultraschall-Sendeempfänger 4 (Fig. 8) an einer Sende- und Empfangsposition des zweiten Messort 42 eher erreicht, als ein zeitlich zweites Echosignal, das an dem zurückgesetzt geparkten Fahrzeug 32 entlang der transversalen Achse 72 reflektiert wird.

Insbesondere ist die nicht trilaterierte Lage des ersten Reflexionspunkts 112 um deutlich mehr als 34,5 cm entlang der transversalen Achse 72 von der nicht trilaterierten Lage des zweiten Reflexionspunkts 122 am selben Messort 42 entfernt. Somit werden der erste Reflexionspunkt 112 und der zweite Reflexionspunkt 122 nicht als Doppelecho erkannt. Auf diese Weise kann zwar vermieden werden, dass an der "rohen" Lage 112 des ersten Reflexionspunkts fälschlicherweise ein hohes Objekt erkannt wird. Allerdings verschattet der erste Reflexionspunkt 112 das dahinterliegende Doppelecho, das von dem zweiten Reflexionspunkt 122 und dem dritten Reflexionspunkt 132 ausgebildet wird. Somit würde das zurückgesetzte Fahrzeug 32 an dem zweiten Messort 42 nicht erkannt und es besteht die Gefahr, dass das zurückgesetzt geparkte Fahrzeug 32 nicht als hohes Objekt in dem seitlichen Umfeld 5 erkannt und bestimmt wird. Entsprechendes gilt für den dritten Messort 43.

Dem wird gemäß dem vorgeschlagenen Verfahren begegnet, indem die Lage eines jeweiligen ersten Reflexionspunkts, an dem die jeweiligen ersten Echosignale reflektiert wurden, trilateriert wird. Das heißt, an dem jeweiligen Messort 41, 42, 43, 44 wird nicht nur an einer ersten Sende- und Empfangsposition (entspricht dem Messort 41, 42, 43, 44) ein erstes Sendesignal ausgesandt und ein erster Empfangssignalverlauf empfangen, sondern es wird an einer in der lateralen Richtung versetzten zweiten Sende- und Empfangsposition (nicht gezeigt; zwischen je zwei Messorten) ein weiteres Sendesignal ausgesandt und ein zweiter Empfangssignalverlauf empfangen. Sodann werden die Lagen der ersten Reflexionspunkte 111, 112, 113, 114 anhand der jeweiligen zeitlich ersten Echosignale in den jeweiligen ersten und zweiten Empfangssignalverläufen trilateriert.

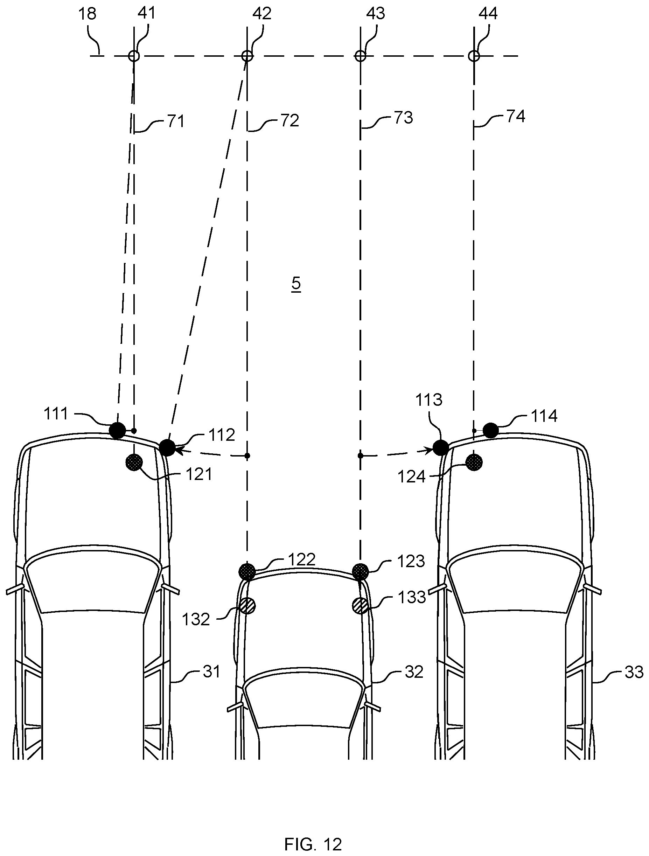

Fig. 12 zeigt eine zweidimensionale Auftragung der Messdaten gemäß dem ersten Ausführungsbeispiel nach dem Trilaterieren der ersten Reflexionspunkte 111, 112, 113, 114. Der erste Reflexionspunkt 111 am ersten Messort 41 weicht nur geringfügig von der transversalen Achse 71 ab und gilt nicht als lateral versetzt. Dagegen ist der erste Reflexionspunkt 112 an dem zweiten Messort 42 erheblich gegenüber der transversalen Achse 72 lateral versetzt und gilt als lateral versetzt..

Gemäß dem vorliegenden Ausführungsbeispiel des vorgeschlagenen Verfahrens wird dasjenige Echosignal, anhand dessen die Doppelechobestimmung erfolgen soll, abhängig von der trilaterierten Lage des jeweiligen ersten Reflexionspunkts 111-114 ausgewählt. Im Speziellen wird das jeweilige zeitlich erste Echosignal nur dann ausgewählt, wenn der dem zeitlichen ersten Echosignal zugehörige Reflexionspunkt 111,114 nicht als lateral versetzt gilt. Als nicht lateral versetzt gilt der Reflexionspunkt 111, 114 insbesondere dann, wenn er um nicht mehr als einen vorbestimmten Toleranzabstand gegenüber der zugehörigen transversalen Achse 71, 74 lateral versetzt ist. Der vorbestimmte Toleranzabstand ist insbesondere ein vorbestimmter Teil oder ein vorbestimmtes Vielfaches eines Abstands zwischen der ersten Sende- und Empfangsposition und der zweiten Sende- und Empfangsposition an dem jeweiligen Messort 41, 44. Der vorbestimmte Teil bzw. das vorbestimmte Vielfache kann insbesondere z.B. eins betragen.

Gilt jedoch der erste Reflexionspunkts 112, 113 nach den vorstehend beschriebenen Kriterien als lateral versetzt, so wird gemäß dem zweiten Ausführungsbeispiel, ohne dass weitere Trilaterationen erfolgen, das jeweilige zweite Echosignal 122, 123 ausgewählt.

Somit erfolgt gemäß dem ersten Ausführungsbeispiel am ersten Messort 41 die Doppelechobestimmung anhand des ersten Reflexionspunkts 111 und des dahinterliegenden zweiten Reflexionspunkts 121. Am zweiten Messort 42 ist der erste Reflexionspunkt 112 um mehr als den halben Abstand zwischen dem Messort 41 und 42 und somit um mehr als den einfachen Abstand zwischen einer ersten und einer zweiten Sende- und Empfangsposition der Messung am Messort 41 und/oder der Messung am Messort 42 entfernt. Daher erfolgt am zweiten Messort 42 die Doppelechobestimmung anhand des zweiten Reflexionspunkts 122 und des dahinterliegenden dritten Reflexionspunkts 132.

Somit ist es vorteilhafterweise möglich, den dritten Reflexionspunkt 132 als virtuellen Reflexionspunkt zu erkennen, der gemeinsam mit dem zweiten Reflexionspunkt 122 ein Doppelecho ausbildet. Es kann erkannt werden, dass sich an einer Lage des zweiten Reflexionspunkts 122 ein hohes Hindernis, nämlich das zurückgesetzt geparkte Fahrzeug 32, befindet. Besonders vorteilhaft ist es dazu nicht erforderlich, die Lage des zweiten Reflexionspunkts 122 und/oder die Lage des dritten Reflexionspunkts 132 zu trilaterieren; vielmehr reicht es aus, nur die Lage des ersten Reflexionspunkts 112 zu trilaterieren. Ist der erste Reflexionspunkt 112 gegenüber der transversalen Achse 72 lateral versetzten, so kann angenommen werden, dass er weitere, entlang der transveralen Achse 72 erfolgende Reflexionen verschattet. Das Treffen einer solchen Annahme, ohne die weiteren Reflexionspunkte 122, 132 ebenfalls zu trilatiereren, kann deswegen vorteilhaft sein, da das Trilaterieren von zweiten und weiteren Reflexionspunkten anhand von zeitlich späterer Echosignale in den jeweiligen Empfangssignalverläufen zunehmend mit Unsicherheiten bzw. Messungenauigkeiten behaftet sein kann.

Für den dritten Messort 43 erfolgt dementsprechend die Doppelechobestimmung anhand des zweiten Reflexionspunkts 123 und des dritten Reflexionspunkts 133. Für den vierten Messort 44 erfolgt die Doppelechobestimmung anhand des ersten Reflexionspunkts 114 und des zweiten Reflexionspunkts 124.

Es ist somit möglich, eine Verschattung des zurückgesetzt geparkten Fahrzeugs 32 durch die Reflexionspunkte 112, 113 an den daneben parkenden, längeren Fahrzeugen 31, 33, wirksam zu vermeiden, ohne dass es erforderlich war, die Lagen der zweiten oder dritten Reflexionspunkte 121-124, 132, 133 zu trilaterieren.

Sofern im ersten Ausführungsbeispiel ein Doppelecho bestimmt wird, bei dem der vordere Reflexionspunkts einen nicht trilaterierter zweiten Reflexionspunkt 122, 123 ist, wird die Lage des Objekts 32 an dem vorderen Reflexionspunkt 122, 123 des Doppelechos als die nicht trilaterierte Lage des vorderen Reflexionspunkts 122, 123 bestimmt. Das heißt, die Lage des Objekts 32 wird in der Entfernung, die anhand der zeitlichen Differenz zwischen dem Empfangen des ausgewählten, zeitlich zweiten Echosignals, das an dem vorderen, z weiten Reflexionspunkt 122, 123 reflektiert wurde, und dem Aussenden des zugehörigen Sendesignals bestimmt wurde, auf der transversalen Achse 72, 73 des jeweiligen Messorts 42, 43 verortet. Sofern ein Doppelecho bestimmt wird, dessen vorderer Reflexionspunkt 111, 114 ein erster Reflexionspunkt 111, 114 ist, wird die Lage des Objekts 32 als die trilaterierte Lage des betreffenden ersten Reflexionspunkts 111, 114 bestimmt.

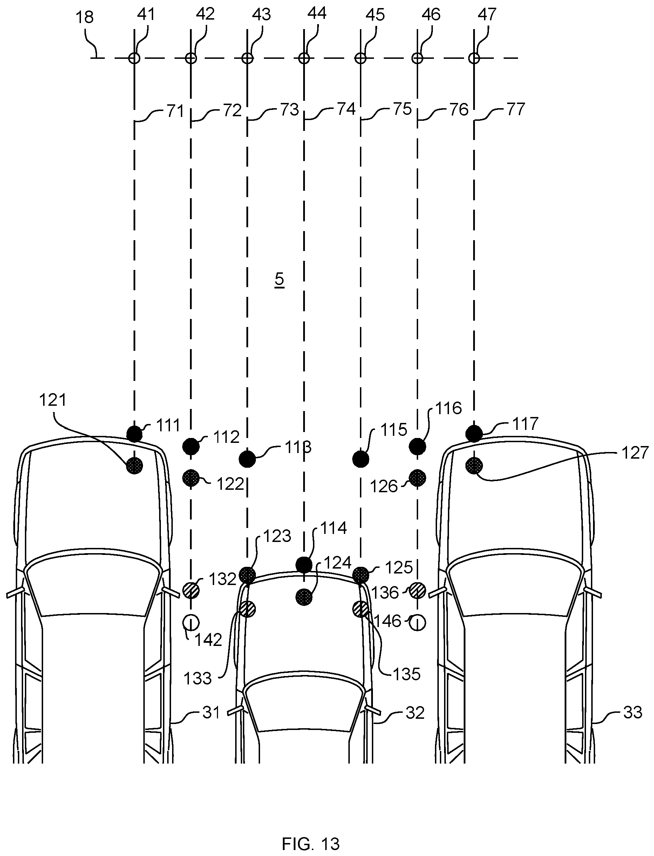

Fig. 13 zeigt eine zweidimensionale Auftragung von rohen Messdaten in einem seitlichen Umfeld 5 des Fahrzeugs 1 (Fig. 8) gemäß einem zweiten Ausführungsbeispiel. Das seitliche Umfeld 5 des Fahrzeugs 1 ist das gleiche wie bei dem ersten Ausführungsbeispiel, jedoch ist im Vergleich zu dem ersten Ausführungsbeispiel aus Fig. 11 ein Messintervall zwischen den Messorten 41-47 im zweiten Ausführungsbeispiel dichter, beispielsweise, weil das Fahrzeug 1 (Fig. 8) mit niedrigerer Geschwindigkeit entlang der lateralen Fahrtrichtung 18 fährt.

Fig. 13 zeigt die nicht trilaterierten Lagen der ersten Reflexionspunkte 111-117, der zweiten Reflexionspunkte 121-127, der dritten Reflexionspunkte 132, 133, 135, 136 und der vierten Reflexionspunkte 142, 146, von denen die jeweiligen zeitlich ersten, zweiten, dritten bzw. vierten Echosignale in den beiden Empfangssignalverläufen einer jeweiligen Messung an den Messorten 41-48 reflektiert wurden.

Lediglich das Paar aus dem nicht trilaterierten ersten und zweiten Reflexionspunkt 114, 124 an der vierten Messposition 44 bildet ein nicht verschattetes Doppelecho aus, das auf das zurückgesetzt geparkte Fahrzeug 31 hindeutet. Die übrigen, auf das zurückgesetzt geparkte Fahrzeug 32 zurückzuführenden Reflexionspunkte 132, 123, 125, 136, 142, 133, 135, 146 sind durch weiter vorn in der transversalen Richtung liegende Reflexionspunkte 112, 122, 113, 115, 116, 126 der lateral versetzt geparkten, längeren Fahrzeuge 31, 33 verschattet.

Gemäß dem zweiten Ausführungsbeispiel werden die Lagen aller identifizierten ersten, zweiten, dritten und vierten Reflexionspunkte 111-146 trilateriert.

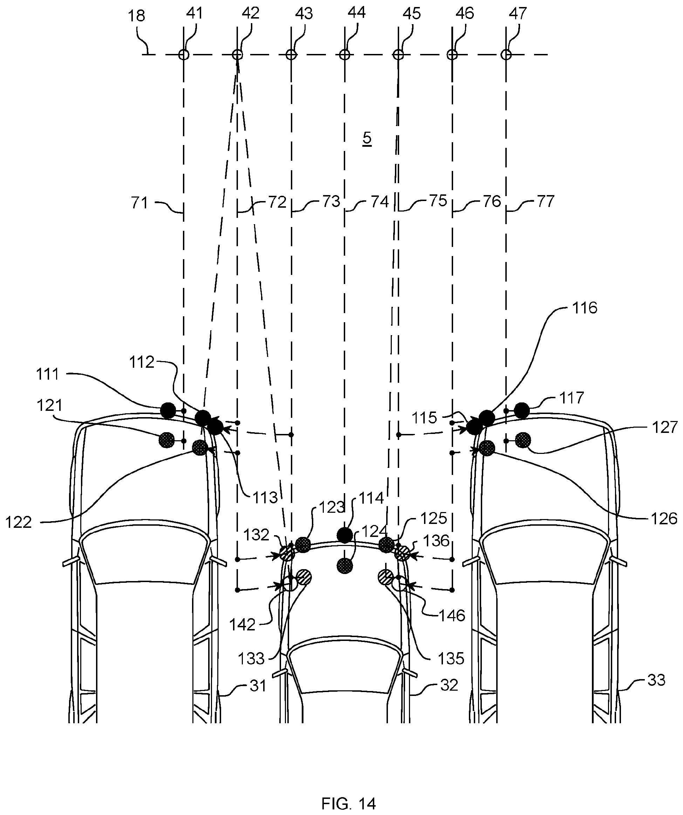

Fig. 14 zeigt eine zweidimensionale Auftragung der Messdaten nach Trilaterieren der Reflexionspunkte 111-146 anhand der jeweils zugehörigen Echosignale gemäß dem zweiten Ausführungsbeispiel. Es ergibt sich ein aufgeräumtes Bild, in dem das zurückgesetzt geparkte Fahrzeug 32 nicht mehr von den daneben geparkten Fahrzeugen 31 und 33 verschattet wird.

Gemäß dem zweiten Ausführungsbeispiel erfolgt für jeden der Messorte 41-47 die Auswahl mindestens eines ausgewählten Reflexionspunkts und eines jeweiligen zeitlich drauffolgenden Reflexionspunkts für die Doppelechobestimmung abhängig von den bei der jeweiligen Messung trilaterierten Lagen der betreffenden Reflexionspunkte.

Es sei angemerkt, dass eine Fahrgeschwindigkeit des Fahrzeugs 1 (Fig. 8) im zweiten Ausführungsbeispiel geringer als im ersten Ausführungsbeispiel ist, dementsprechend ein Abstand benachbarter der Messorte 41-47 geringer ist und damit auch ein Abstand zwischen einer jeweiligen ersten bzw. zweiten Sende- und Empfangsposition bei einer jeweiligen Messung geringer ist. Demgemäß kann bei dem zweiten Ausführungsbeispiel ein Toleranzbereich für eine jeweilige Bestimmung, ob eine jeweilige trilaterierte Lage eines der Reflexionspunkte 111-146 als lateral versetzt gilt, geringer als im ersten Ausführungsbeispiel sin. Insbesondere kann der Toleranzbereich für eine jeweilige Bestimmung, ob eine jeweilige trilaterierte Lage eines der Reflexionspunkte 111-146 als lateral versetzt gilt, in Abhängigkeit von der Fahrgeschwindigkeit des Fahrzeugs 1 (Fig. 8) gewählt werden.

In einer ersten Variante des zweiten Ausführungsbeispiels werden nur diejenigen Reflexionspunkte für eine Doppelechobestimmung ausgewählt, die nach den am ersten Ausführungsbeispiel erläuterten Grundsätzen gegenüber der jeweils zugehörigen transversalen Achse 71-77 nicht als lateral versetzt gelten. In Fig. 14 sind dies die ersten Reflexionspunkte 111, 114 und 117 sowie die zweiten Reflexionspunkte 123, 125.

Des Weiteren lautet in einer Weiterbildung der ersten Variante ein weiteres Kriterium für das Bestimmen des Vorliegens eines Doppelechos, dass auch der zeitlich auf den ausgewählten Reflexionspunkt 111, 114, 117, 123, 125 folgende Reflexionspunkt 121, 124, 127, 133, 135 nicht als gegenüber der jeweiligen transversalen Achse 71, 73, 74, 75, 77 als lateral versetzt gilt. Dies in allen genannten Beispielen der Fall.

Somit kann anhand der Paare aus erstem und zweiten Reflexionspunkt 111; 121, 114; 124 und 117; 127 sowie anhand der Paare aus zweitem und drittem Reflexionspunkt 123; 133, 125; 135 jeweils ein Doppelecho bestimmt werden.

In einer zweiten Variante des zweiten Ausführungsbeispiels werden mehrere, vorzugsweise alle, Reflexionspunkte 111-146 für eine Doppelechobestimmung ausgewählt. Jedoch lautet ein weiteres Kriterium für das Bestimmen des Vorliegens eines Doppelechos, dass der zeitlich auf den ausgewählten Reflexionspunkt 111-146 folgende Reflexionspunkt 111-146 nicht als gegenüber dem jeweils ausgewählten Reflexionspunkt 111-146 als lateral versetzt gilt.

Nach diesen Grundsätzen können in Fig. 14 die folgenden Doppelechos aus einem ausgewählten und einem zeitlich bei einer jeweiligen Messung darauffolgenden, d.h. in Fig. 14 weiter hinten angeordneten Reflexionspunkt bestimmt werden: erste Reflexionspunkte 111, 112, 114, 116, 117 mit den jeweiligen darauffolgenden zweiten Reflexionspunkten 121, 122, 124, 126, 127; zweite Reflexionspunkte 123, 125 mit den jeweiligen zeitlich darauffolgenden dritten Reflexionspunkgen 133, 135; und dritte Reflexionspunkte 132, 136 mit den jeweiligen zeitlich darauffolgenden vierten Reflexionspunkten 142, 146.

In der zweiten Variante des zweiten Ausführungsbeispiels können demgemäß die Lagen und Höhen der geparkten Fahrzeuge 31, 32, 33 an insgesamt neun Lagen in dem seitlichen Umfeld 5, nämlich an den Lagen der Reflexionspunkte 111, 112, 132, 123, 114, 125, 136, 116 und 117 korrekt bestimmt werden; von diesen neuen Lagen waren acht Lagen zunächst verschattet und sind durch das vorgeschlagene Verfahren sichtbar gemacht worden.

Wie anhand von mehreren Ausführungsbeispielen beschreiben wurde, ermöglicht das vorgeschlagene Verfahren das Sichtbarmachen von verschatteten Doppelechos. Somit kann eine Anzahl an Messpunkten mit Höhen- und Lageinformationen in dem seitlichen Umfeld 5 erhöht und das seitliche Umfeld 5 mit höherer Genauigkeit vermessen werden.

Nachdem das seitliche Umfeld 5 durch wiederholtes Durchführen des vorgeschlagenen Verfahrens vermessen wurde, kann das Parkassistenzsystem 3 (Fig. 1) des Fahrzeugs 1 (Fig. 1) eine Parklücke in dem seitlichen Umfeld 5 bestimmen, die frei von als hoch bestimmten Objekten 31, 32, 33 (Fig. 11-14) ist, und das Fahrzeug in die bestimmte Parklücke einparken. Somit ermöglicht das vorgeschlagene Verfahren auch ein sichereres, kollisionsfreies Einparken des Fahrzeugs 1 mit der vorgeschlagenen Messeinrichtung 6 (Fig. 1, 10).

Obwohl die vorliegende Erfindung anhand von Ausführungsbeispielen beschrieben wurde, ist sie vielfältig modifizierbar.

Fig. 1 zeigt die Messvorrichtung 6 als Teil des Parkassistenzsystems 3. Die Messvorrichtung 6 kann jedoch alternativ hierzu auch separat in dem Fahrzeug 1 angeordnet sein. Die Messvorrichtung 6 kann auch mit dem Ultraschall-Sendeempfänger 4 zu einer Einheit integriert sein.

Die vorgeschlagene Lehre wurde anhand der vereinfachenden Annahme beschrieben, dass das Fahrzeug 1 und der Ultraschall-Sendeempfänger 4 sich beim Aussenden eines Sendesignals und während des gesamten Empfangens des Empfangssignalverlaufs an ein und derselben Sende- und Empfangsposition befindet, anschließend zu einer nächsten Sende- und Empfangsposition weiterfährt, und dort erneut ein stationäres Senden und Empfangen durchführt. Es versteht sich jedoch, dass das Fahrzeug 1 bevorzugt mit gleichmäßiger Fahrgeschwindigkeit entlang der lateralen Richtung 18 fahren kann. In diesem Falle unterscheiden sich die Sendeposition des Sendesignals von den jeweiligen Empfangspositionen jeweilige Echosignale in dem empfangenen Echosignalverlauf. Eine entsprechende Anpassung der vorliegend offenbarten geometrischen, trigonometrischen bzw. mathematischen Überlegungen bereitet dem Fachmann keine Schwierigkeiten.

### BEZUGSZEICHENLISTE

- 1, 1': Fahrzeug
- 2: Umfeld
- 3: Parkassistenzsystem
- 4' 4,: Ultraschall-Sendeempfänger
- 5: seitliches Umfeld
- 6: Messvorrichtung
- 7: transversale Achse
- 8: horizontaler Verlauf der Sendesignalintensität
- 9: vertikaler Verlauf der Sendesignalintensität
- 10: Empfangssignalverlauf
- 11: geparktes weiteres Fahrzeug
- 12: erster Punkt, erster Reflexionspunkt
- 13: zweiter Punkt
- 14: dritter Punkt
- 15: Boden
- 16: virtueller Reflexionspunkt, zweiter Reflexionspunkt
- 17: Bordsteinkante
- 18: laterale Richtung
- 19, 19': Kreis
- 21-26: erste bis sechste Einheit
- 31-33: Hindernis, Objekt, geparktes Fahrzeug
- 41-47: erster bis vierter Messort
- 71-77: erste bis siebte transversale Achse
- 111-146: Reflexionspunkte
- t₀-t₆: Zeitpunkte
- d, d': Entfernungen
- Vₜₕ: Schwellwert
- S1-S6: Verfahrensschritte

## Patentansprüche

1. Verfahren zum Vermessen eines seitlichen Umfelds (5) eines mit mindestens einem seitlichen Ultraschall-Sendeempfänger (4) versehenen Fahrzeugs (1) mit den Schritten:
a) Ansteuern (S1) des mindestens einen Ultraschall-Sendeempfängers (4) an mindestens zwei Sende- und Empfangspositionen entlang einer lateralen Richtung (18), die eine Fahrtrichtung des Fahrzeugs (1) ist, zum Aussenden eines jeweiligen Sendesignals in einer transversalen Richtung quer zu der Fahrtrichtung (18) und Empfangen eines jeweiligen, aus dem seitlichen Umfeld (5) reflektierten Empfangssignalverlaufs (10);
b) Identifizieren (S2) einer Anzahl Echosignale in dem jeweiligen Empfangssignalverlauf (10);
c) Trilaterieren (S3) einer Lage eines ersten Reflexionspunkts (111-117) in dem seitlichen Umfeld, von dem die zeitlich ersten Echosignale in dem jeweiligen Empfangssignalverlauf (10) reflektiert wurden;
d) Auswählen (S4), aus der Anzahl Echosignale in einem der Empfangssignalverläufe (10), eines Echosignals für eine Doppelechobestimmung abhängig mindestens von der in Schritt c) trilaterierten Lage des ersten Reflexionspunkts (111-117) der zeitlich ersten Echosignale;
e) Bestimmen (S5), ob das ausgewählte Echosignal mit einem etwaigen weiteren, zeitlich darauffolgenden Echosignal ein Doppelecho ausbildet; und
f) Bestimmen (S6) einer Höhe eines Objekts (31-33) in dem seitlichen Umfeld (5) an einem Reflexionspunkt (111-136), an dem das ausgewählte Echosignal reflektiert wurde, als hoch, falls in Schritt e) ein Doppelecho festgestellt wird, und als niedrig, falls kein Doppelecho festgestellt wird.

2. Verfahren nach Anspruch 1, **dadurch gekennzeichnet, dass**
in Schritt c) mindestens eine Lage eines zweiten Reflexionspunkts (121-146) in dem seitlichen Umfeld (5) trilateriert wird, von dem die zeitlich zweiten Echosignale in dem jeweiligen Empfangssignalverlauf (10) reflektiert wurden, und
das Auswählen eines Echosignals für eine Doppelechobestimmung in Schritt d) und/oder das Bestimmen in Schritt e), ob das ausgewählte Echosignal mit einem weiteren, zeitlich darauffolgenden Echosignal ein Doppelecho ausbildet, abhängig von der in Schritt c) trilaterierten Lage des Reflexionspunkts (111-146) des ausgewählten Echosignals und/oder abhängig von der in Schritt c) trilaterierten Lage des Reflexionspunkts (111-146) des zeitlich darauffolgenden Echosignals erfolgt.

3. Verfahren nach Anspruch 2 oder 3, **dadurch gekennzeichnet, dass**
in Schritt d) ein Echosignal in dem einen Empfangssignalverlauf (10) für eine jeweilige Doppelechobestimmung ausgewählt wird, für dessen zugehörigen Reflexionspunkt (111, 112, 123, 114, 125, 116, 117) in Schritt c) eine Lage trilateriert wurde, die gegenüber der zugehörigen Sende- und Empfangsposition des einen Empfangssignalverlaufs nicht lateral versetzt ist.

4. Verfahren nach Anspruch 2 oder 3, **dadurch gekennzeichnet, dass**
in Schritt e) das Doppelecho nur unter der Bedingung festgestellt wird, dass für die zu dem ausgewählten Echosignal und dem zeitlich darauffolgenden Echosignal zugehörigen Reflexionspunkte (111, 121, 112, 122, 123, 133, 114, 124, 125, 135, 116, 126, 117, 127) in Schritt c) jeweilige Lagen trilateriert wurden, die gegenüber der zugehörigen Sende- und Empfangsposition des einen Empfangssignalverlaufs nicht lateral versetzt sind.

5. Verfahren nach Anspruch 2 oder 3, **dadurch gekennzeichnet, dass**
in Schritt e) das Doppelecho nur unter der Bedingung festgestellt wird, dass für den dem zeitlich darauffolgenden Echosignal zugehörigen Reflexionspunkt (121, 122, 142, 133, 124, 135, 126, 146, 127) in Schritt c) eine Lage trilateriert wurde, die gegenüber einer in Schritt c) für den dem ausgewählten Echosignal zugehörigen Reflexionspunkt (111, 112, , 132, 123, 114, 125, 116, 136, 117) trilaterierten Lage nicht lateral versetzt ist.

6. Verfahren nach Anspruch 1, **dadurch gekennzeichnet, dass**
in Schritt d) das zeitlich zweite Echosignal in dem einen Empfangssignalverlauf für eine Doppelechobestimmung ausgewählt wird, falls die in Schritt c) trilaterierte Lage des ersten Reflexionspunkts (112, 113) gegenüber der zugehörigen Sende- und Empfangsposition des einen Empfangssignalverlaufs (10) lateral versetzt ist; und andernfalls das zeitlich erste Echosignal ausgewählt wird.

7. Verfahren nach einem der vorhergehenden Ansprüche, **dadurch gekennzeichnet, dass** in Schritt e) das Doppelecho nur dann festgestellt wird, wenn der zeitliche Abstand des ausgewählten und des zeitlich darauffolgenden Echosignals in dem einen Empfangssignalverlauf (10) kleiner als ein vorbestimmter Maximalabstand ist.

8. Verfahren nach einem der vorhergehenden Ansprüche, **dadurch gekennzeichnet, dass** in Schritt e) das Doppelecho nur dann festgestellt wird, wenn eine Signalstärke des zeitlich darauffolgenden Echosignals nicht höher ist als eine Signalstärke des ausgewählten Echosignals und um nicht mehr als einen vorbestimmten Faktor von der Signalstärke des ausgewählten Echosignals abweicht.

9. Verfahren nach einem der vorhergehenden Ansprüche, **dadurch gekennzeichnet, dass** ein Toleranzbereich für eine jeweilige Bestimmung, ob eine jeweilige trilaterierte Lage lateral versetzt ist oder nicht, in Abhängigkeit von einer Fahrgeschwindigkeit des Fahrzeugs (1) gewählt wird.

10. Verfahren nach einem der vorhergehenden Ansprüche, **gekennzeichnet durch** g) Bestimmen einer Lage des Objekts (31-33), dessen Höhe in Schritt f) bestimmt wurde, anhand einer zeitlichen Differenz zwischen dem Empfangen des ausgewählten Echosignals in dem einen Empfangssignalverlauf (10) und dem Aussenden des zugehörigen Sendesignals sowie anhand der transversalen Richtung quer zu der Fahrtrichtung (18) des Fahrzeugs (1).

11. Verfahren nach einem der vorhergehenden Ansprüche, **gekennzeichnet durch** g) Bestimmen einer Lage des Objekts (31-33), dessen Höhe in Schritt f) bestimmt wurde, als die in Schritt c) trilaterierte Lage des Reflexionspunkts (111, 112, 132, 123, 114, 125, 116, 136, 116, 117), von dem das ausgewählte Echosignal reflektiert wurde.

12. Verfahren zum Einparken eines Fahrzeugs (1), das mit mindestens einem seitlichen Ultraschall-Sendeempfänger (4) und einem Parkassistenzsystem (3) versehen ist, umfassend:
Durchführen des Verfahrens nach einem der Ansprüche 1 bis 11 wiederholt an mehreren Orten (41-47) entlang einer Fahrtrichtung (18) parallel zu einem seitlichen Umfeld (5) des Fahrzeugs (1), um die Lagen und die Höhen eines oder mehrerer Objekte (31-33) in dem seitlichen Umfeld (5) des Fahrzeugs (1) zu bestimmen;
Bestimmen einer Parklücke in dem seitlichen Umfeld (5), die frei von Objekten (31-33) ist, die als hoch bestimmt wurden; und
Einparken des Fahrzeugs (1) in die Parklücke mit Hilfe des Parkassistenzsystems (3).

13. Computerprogrammprodukt, umfassend Befehle, die bei der Ausführung durch eine Computervorrichtung diese dazu veranlassen, das Verfahren nach einem der Ansprüche 1 bis 12 auszuführen.

14. Messvorrichtung (6) für ein Parkassistenzsystem (3) eines mit mindestens einem seitlichen Ultraschall-Sendeempfänger versehenen Fahrzeugs (1), wobei die Messvorrichtung (6) zum Vermessen eines seitlichen Umfelds (5) des Fahrzeugs (1) eingerichtet ist und umfasst:
a) eine erste Einheit (21), die dazu eingerichtet ist, den mindestens einen Ultraschall-Sendeempfänger (4) an mindestens zwei Sende- und Empfangspositionen entlang einer lateralen Richtung (18), die eine Fahrtrichtung des Fahrzeugs (1) ist, zum Aussenden eines jeweiligen Sendesignals in einer transversalen Richtung quer zu der Fahrtrichtung (18) und Empfangen eines jeweiligen, aus dem seitlichen Umfeld reflektierten Empfangssignalverlaufs (10) anzusteuern;
b) eine zweite Einheit (22), die dazu eingerichtet ist, eine Anzahl Echosignale in dem jeweiligen Empfangssignalverlauf (10) zu identifizieren;
c) eine dritte Einheit (23), die dazu eingerichtet ist, eine Lage eines ersten Reflexionspunkts (111-117) in dem seitlichen Umfeld (5), von dem die zeitlich ersten Echosignale in dem jeweiligen Empfangssignalverlauf (10) reflektiert wurden, zu trilaterieren;
d) eine vierte Einheit (24), die dazu eingerichtet ist, aus der Anzahl Echosignale in einem der Empfangssignalverläufe (10) ein ausgewähltes Echosignal für eine Doppelechobestimmung abhängig von mindestens der von der dritten Einheit (23) trilaterierten Lage des ersten Reflexionspunkts (111-117) der zeitlich ersten Echosignale auszuwählen;
e) eine fünfte Einheit (25), die dazu eingerichtet ist, zu bestimmen, ob das ausgewählte Echosignal mit einem etwaigen weiteren, zeitlich darauffolgenden Echosignal ein Doppelecho ausbildet; und
f) eine sechste Einheit (26), die dazu eingerichtet ist, eine Höhe eines Objekts in dem seitlichen Umfeld (5) an einem Reflexionspunkt (111-136), an dem das ausgewählte Echosignal reflektiert wurde, als hoch zu bestimmen, falls die fünfte Einheit (25) ein Doppelecho festgestellt wird, und als niedrig zu bestimmen, falls die fünfte Einheit (25) kein Doppelecho festgestellt hat.

15. Fahrzeug (1) mit einem Parkassistenzsystem (3), das zum halb- oder vollautonomen Fahren des Fahrzeugs (1) eingerichtet ist, wobei das Fahrzeug (1) und/oder das Parkassistenzsystem (3) eine Messvorrichtung (6) nach Anspruch 14 umfasst.

## Claims

1. Method for measuring lateral surroundings (5) of a vehicle (1) provided with at least one lateral ultrasonic transceiver (4), having the steps of:
a) actuating (S1) the at least one ultrasonic transceiver (4) at at least two transmission and reception positions along a lateral direction (18), which is a direction of travel of the vehicle (1), for the purpose of transmitting a respective transmission signal in a transverse direction across the direction of travel (18) and receiving a respective received signal characteristic (10) reflected from the lateral surroundings (5);
b) identifying (S2) a number of echo signals in the respective received signal characteristic (10);
c) trilaterating (S3) a bearing of a first reflection point (111-117) in the lateral surroundings, from which the chronologically first echo signals in the respective received signal characteristic (10) were reflected;
d) selecting (S4), from the number of echo signals in one of the received signal characteristics (10), an echo signal for a double echo determination according to at least the bearing of the first reflection point (111-117) relating to the chronologically first echo signals that was trilaterated in step c);
e) determining (S5) whether the selected echo signal forms a double echo with any further, chronologically subsequent echo signal; and
f) determining (S6) a height of an object (31-33) in the lateral surroundings (5) at a reflection point (111-136) at which the selected echo signal was reflected as being tall if a double echo is detected in step e), and as being short if no double echo is detected.

2. Method according to Claim 1, **characterized in that** step c) comprises trilaterating at least one bearing of a second reflection point (121-146) in the lateral surroundings (5), from which the chronologically second echo signals in the respective received signal characteristic (10) were reflected, and
the selection of an echo signal for a double echo determination in step d) and/or the determination of whether the selected echo signal forms a double echo with a further, chronologically subsequent, echo signal in step e) is performed according to the bearing of the reflection point (111- 146) of the selected echo signal that was trilaterated in step c) and/or according to the bearing of the reflection point (111-146) of the chronologically subsequent echo signal that was trilaterated in step c).

3. Method according to Claim 2 or 3, **characterized in that**
step d) comprises selecting, for a respective double echo determination, an echo signal in the one received signal characteristic (10) for whose associated reflection point (111, 112, 123, 114, 125, 116, 117) a bearing that is not laterally offset in relation to the associated transmission and reception position of the one received signal characteristic was trilaterated in step c).

4. Method according to Claim 2 or 3, **characterized in that**
step e) comprises detecting the double echo only on the condition that respective bearings that are not laterally offset in relation to the associated transmission and reception position of the one received signal characteristic were trilaterated in step c) for the reflection points (111, 121, 112, 122, 123, 133, 114, 124, 125, 135, 116, 126, 117, 127) associated with the selected echo signal and the chronologically subsequent echo signal.

5. Method according to Claim 2 or 3, **characterized in that**
step e) comprises detecting the double echo only on the condition that a bearing that is not laterally offset in relation to a bearing that was trilaterated in step c) for the reflection point (111, 112, 132, 123, 114, 125, 116, 136, 117) associated with the selected echo signal was trilaterated in step c) for the reflection point (121, 122, 142, 133, 124, 135, 126, 146, 127) associated with the chronologically subsequent echo signal.

6. Method according to Claim 1, **characterized in that** step d) comprises selecting the chronologically second echo signal in the one received signal characteristic for a double echo determination if the bearing of the first reflection point (112, 113) that was trilaterated in step c) is laterally offset in relation to the associated transmission and reception position of the one received signal characteristic (10); and otherwise selecting the chronologically first echo signal.

7. Method according to one of the preceding claims, **characterized in that** step e) comprises detecting the double echo only if the interval of time between the selected echo signal and the chronologically subsequent echo signal in the one received signal characteristic (10) is less than a predetermined maximum interval.

8. Method according to one of the preceding claims, **characterized in that** step e) comprises detecting the double echo only if a signal strength of the chronologically subsequent echo signal is not higher than a signal strength of the selected echo signal and deviates from the signal strength of the selected echo signal by no more than a predetermined factor.

9. Method according to one of the preceding claims, **characterized in that** a tolerance range for a respective determination of whether or not a respective trilaterated bearing is laterally offset is selected on the basis of a speed of travel of the vehicle (1).

10. Method according to one of the preceding claims, **characterized by**
g) determining a bearing of the object (31-33) whose height was determined in step f) on the basis of a time difference between the reception of the selected echo signal in the one received signal characteristic (10) and the transmission of the associated transmission signal, and on the basis of the transverse direction across the direction of travel (18) of the vehicle (1).

11. Method according to one of the preceding claims, **characterized by**
g) determining a bearing of the object (31-33) whose height was determined in step f) as the bearing of the reflection point (111, 112, 132, 123, 114, 125, 116, 136, 116, 117) from which the selected echo signal was reflected that was trilaterated in step c).

12. Method for parking a vehicle (1) provided with at least one lateral ultrasonic transceiver (4) and a parking assistance system (3), comprising:
performing the method according to one of Claims 1 to 11 repeatedly at multiple locations (41-47) along a direction of travel (18) parallel to lateral surroundings (5) of the vehicle (1) in order to determine the bearings and heights of one or more objects (31-33) in the lateral surroundings (5) of the vehicle (1);
determining a parking space in the lateral surroundings (5) that is free of objects (31-33) that were determined as being tall; and
parking the vehicle (1) in the parking space using the parking assistance system (3).

13. Computer program product comprising instructions that, when executed by a computer apparatus, cause the latter to carry out the method according to one of Claims 1 to 12.

14. Measuring apparatus (6) for a parking assistance system (3) of a vehicle (1) provided with at least one lateral ultrasonic transceiver, wherein the measuring apparatus (6) is configured to measure lateral surroundings (5) of the vehicle (1) and comprises:
a) a first unit (21) configured to actuate the at least one ultrasonic transceiver (4) at at least two transmission and reception positions along a lateral direction (18), which is a direction of travel of the vehicle (1), for the purpose of transmitting a respective transmission signal in a transverse direction across the direction of travel (18) and receiving a respective received signal characteristic (10) reflected from the lateral surroundings;
b) a second unit (22) configured to identify a number of echo signals in the respective received signal characteristic (10);
c) a third unit (23) configured to trilaterate a bearing of a first reflection point (111-117) in the lateral surroundings (5), from which the chronologically first echo signals in the respective received signal characteristic (10) were reflected;
d) a fourth unit (24) configured to select, from the number of echo signals in one of the received signal characteristics (10), a selected echo signal for a double echo determination according to at least the bearing of the first reflection point (111-117) relating to the chronologically first echo signals that was trilaterated by the third unit (23);
e) a fifth unit (25) configured to determine whether the selected echo signal forms a double echo with any further, chronologically subsequent echo signal; and
f) a sixth unit (26) configured to determine a height of an object in the lateral surroundings (5) at a reflection point (111-136) at which the selected echo signal was reflected as being tall if the fifth unit (25) has detected a double echo, and as being short if the fifth unit (25) has detected no double echo.

15. Vehicle (1) having a parking assistance system (3) that is configured for semi- or fully autonomous driving of the vehicle (1), wherein the vehicle (1) and/or the parking assistance system (3) comprises a measuring apparatus (6) according to Claim 14.

## Revendications

1. Procédé de mesure d'un environnement latéral (5) d'un véhicule (1) muni d'au moins un émetteur-récepteur latéral à ultrasons (4), avec les étapes suivantes :
a) la commande (S1) de l'au moins un émetteur-récepteur à ultrasons (4) en au moins deux positions d'émission et de réception le long d'une direction latérale (18), qui est une direction de déplacement du véhicule (1), pour émettre un signal d'émission respectif dans une direction transversale perpendiculaire à la direction de déplacement (18) et recevoir un profil de signal de réception respectif (10) réfléchi à partir de l'environnement latéral (5) ;
b) l'identification (S2) d'un nombre de signaux d'écho dans le profil de signal de réception respectif (10) ;
c) la trilatération (S3) d'un emplacement d'un premier point de réflexion (111-117) dans l'environnement latéral à partir duquel les premiers signaux d'écho dans le temps ont été réfléchis dans le profil de signal de réception respectif (10) ;
d) la sélection (S4), parmi le nombre de signaux d'écho dans l'un des profils de signal de réception (10), d'un signal d'écho pour une détermination d'écho double en fonction au moins de l'emplacement, déterminé par trilatération à l'étape c), du premier point de réflexion (111-117) des premiers signaux d'écho dans le temps ;
e) la détermination (S5) de si le signal d'écho sélectionné forme un double écho avec tout autre signal d'écho suivant dans le temps ; et
f) la détermination (S6) d'une hauteur d'un objet (31-33) dans l'environnement latéral (5) à un point de réflexion (111-136) où le signal d'écho sélectionné a été réfléchi comme étant haute si un écho double est détecté à l'étape e) et comme étant basse si aucun écho double n'est détecté.

2. Procédé selon la revendication 1, **caractérisé en ce que**
à l'étape c), on détermine par trilatération au moins un emplacement d'un deuxième point de réflexion (121-146) dans l'environnement latéral (5) à partir duquel les deuxièmes signaux d'écho dans le temps ont été réfléchis dans le profil de signal de réception respectif (10), et la sélection d'un signal d'écho pour une détermination d'écho double à l'étape d) et/ou la détermination à l'étape e) de si le signal d'écho sélectionné forme un écho double avec un autre signal d'écho suivant dans le temps s'effectue en fonction de l'emplacement, déterminé par trilatération à l'étape c), du point de réflexion (111-146) du signal d'écho sélectionné et/ou en fonction de l'emplacement, déterminé par trilatération à l'étape c), du point de réflexion (111-146) du signal d'écho suivant dans le temps.

3. Procédé selon la revendication 2 ou 3, **caractérisé en ce que**
à l'étape d), on sélectionne un signal d'écho dans le profil de signal de réception (10) pour une détermination d'écho double respective, pour le point de réflexion associé (111, 112, 123, 114, 125, 116, 117) duquel on a déterminé par trilatération à l'étape c) un emplacement qui n'est pas décalé latéralement par rapport aux positions d'émission et de réception associées du profil de signal de réception.

4. Procédé selon la revendication 2 ou 3, **caractérisé en ce que**
à l'étape e), le double écho n'est détecté qu'à condition que, pour les points de réflexion (111, 121, 112, 122, 123, 133, 114, 124, 125, 135, 116, 126, 117, 127) associés au signal d'écho sélectionné et au signal d'écho suivant dans le temps, des emplacements respectifs qui ne sont pas décalés latéralement par rapport aux positions d'émission et de réception associées du profil de signal de réception aient été déterminés par trilatération à l'étape c).

5. Procédé selon la revendication 2 ou 3, **caractérisé en ce que**
à l'étape e), le double écho n'est détecté qu'à condition que, pour le point de réflexion (121, 122, 142, 133, 124, 135, 126, 146, 127) associé au signal d'écho suivant dans le temps, un emplacement ait été déterminé par trilatération à l'étape c) qui n'est pas décalé latéralement par rapport à un emplacement, déterminé par trilatération à l'étape c), pour le point de réflexion (111, 112, 132, 123, 114, 125, 116, 136, 117) associé au signal d'écho sélectionné.

6. Procédé selon la revendication 1, **caractérisé en ce que**
à l'étape d), le deuxième signal d'écho dans le temps dans le profil de signal de réception est sélectionné pour une détermination de double écho si l'emplacement, déterminé par trilatération à l'étape c), du premier point de réflexion (112, 113) est décalé latéralement par rapport aux positions d'émission et de réception associées du profil de signal de réception (10) ; et sinon, le premier signal d'écho dans le temps est sélectionné.

7. Procédé selon l'une quelconque des revendications précédentes, **caractérisé en ce qu'**à l'étape e), le double écho n'est détecté que si l'écart dans le temps entre le signal d'écho sélectionné et le signal d'écho suivant dans le temps est inférieur à un écart maximal prédéterminé dans le profil de signal de réception (10).

8. Procédé selon l'une quelconque des revendications précédentes, **caractérisé en ce qu'**à l'étape e), le double écho n'est détecté que si une intensité de signal du signal d'écho suivant dans le temps n'est pas supérieure à une intensité de signal du signal d'écho sélectionné et ne diffère pas de l'intensité de signal du signal d'écho sélectionné de plus d'un facteur prédéterminé.

9. Procédé selon l'une quelconque des revendications précédentes, **caractérisé en ce qu'**une plage de tolérance pour une détermination respective de si un emplacement respectif déterminé par trilatération est ou non décalé latéralement est sélectionnée en fonction d'une vitesse de déplacement du véhicule (1).

10. Procédé selon l'une quelconque des revendications précédentes, **caractérisé par**
g) la détermination d'un emplacement de l'objet (31-33) dont la hauteur a été déterminée à l'étape f) sur la base d'une différence dans le temps entre la réception du signal d'écho sélectionné dans le profil de signal de réception (10) et l'émission du signal d'émission associé, ainsi que sur la base de la direction transversale perpendiculaire à la direction de déplacement (18) du véhicule (1).

11. Procédé selon l'une quelconque des revendications précédentes, **caractérisé par**
g) la détermination d'un emplacement de l'objet (31-33) dont la hauteur a été déterminée à l'étape f) comme l'emplacement, déterminé à trilatération à l'étape c), du point de réflexion (111, 112, 132, 123, 114, 125, 116, 136, 116, 117) à partir duquel le signal d'écho sélectionné a été réfléchi.

12. Procédé pour garer un véhicule (1) qui est muni d'au moins un émetteur-récepteur latéral à ultrasons (4) et d'un système d'assistance au stationnement (3), comprenant :
la mise en œuvre du procédé selon l'une quelconque des revendications 1 à 11 de manière répétée en plusieurs endroits (41-47) le long d'une direction de déplacement (18) parallèle à un environnement latéral (5) du véhicule (1) pour déterminer les emplacements et les hauteurs d'un ou de plusieurs objets (31-33) dans l'environnement latéral (5) du véhicule (1) ;
la détermination d'un espace de stationnement dans l'environnement latéral (5) qui est exempt d'objets (31-33) déterminés comme étant hauts ; et
le stationnement du véhicule (1) dans l'espace de stationnement à l'aide du système d'assistance au stationnement (3).

13. Produit de programme informatique comprenant des instructions qui, lorsqu'elles sont exécutées par un dispositif informatique, amènent celui-ci à exécuter le procédé selon l'une quelconque des revendications 1 à 12.

14. Dispositif de mesure (6) pour un système d'assistance au stationnement (3) d'un véhicule (1) muni d'au moins un émetteur-récepteur latéral à ultrasons, le dispositif de mesure (6) étant adapté pour mesurer un environnement latéral (5) du véhicule (1) et comprenant :
a) une première unité (21) adaptée pour commander l'au moins un émetteur-récepteur à ultrasons (4) à au moins deux positions d'émission et de réception le long d'une direction latérale (18), qui est une direction de déplacement du véhicule (1), pour émettre un signal d'émission respectif dans une direction transversale perpendiculaire à la direction de déplacement (18) et pour recevoir un profil de signal de réception respectif (10) réfléchi depuis l'environnement latéral ;
b) une deuxième unité (22) adaptée pour identifier un nombre de signaux d'écho dans le profil de signal de réception respectif (10) ;
c) une troisième unité (23) adaptée pour déterminer par trilatération un emplacement d'un premier point de réflexion (111-117) dans l'environnement latéral (5) à partir duquel les premiers signaux d'écho dans le temps ont été réfléchis dans le profil de signal de réception respectif (10) ;
d) une quatrième unité (24) adaptée pour sélectionner un signal d'écho sélectionné parmi le nombre de signaux d'écho dans l'un des profils de signal de réception (10) pour une détermination d'écho double en fonction d'au moins l'emplacement, déterminé par trilatération par la troisième unité (23), du premier point de réflexion (111-117) des premiers signaux d'écho dans le temps ;
e) une cinquième unité (25) adaptée pour déterminer si le signal d'écho sélectionné forme un double écho avec tout autre signal d'écho suivant dans le temps ; et
f) une sixième unité (26) adaptée pour déterminer une hauteur d'un objet dans l'environnement latéral (5) à un point de réflexion (111-136) où le signal d'écho sélectionné a été réfléchi comme étant haute si la cinquième unité (25) a détecté un écho double, et comme étant basse si la cinquième unité (25) n'a pas détecté d'écho double.

15. Véhicule (1) avec un système d'assistance au stationnement (3), qui est adapté pour la conduite semi-autonome ou entièrement autonome du véhicule (1), le véhicule (1) et/ou le système d'assistance au stationnement (3) comprenant un dispositif de mesure (6) selon la revendication 14.
